# EUROPEAN PATENT SPECIFICATION

(11) **EP 1 522 822 B1**
(45) Date of publication and mention of the grant of the patent: **17.09.2014**
(21) Application number: 03738500.2
(22) Date of filing: 23.06.2003
(51) Int. Cl.: G01C 21/00, G08G 1/137

(54) **NAVIGATION SYSTEM, USER TERMINAL, NAVIGATION DEVICE, AND INFORMATION RECORDING METHOD PROGRAM**
NAVIGATIONSSYSTEM, BENUTZERENDGERÄT, NAVIGATIONSEINRICHTUNG UND INFORMATIONSAUFZEICHNUNGSVERFAHRENSPROGRAMM
SYSTEME DE NAVIGATION, TERMINAL UTILISATEUR, DISPOSITIF DE NAVIGATION ET PROCEDE ET PROGRAMME D'ENREGISTREMENT D'INFORMATIONS

(30) Priority: 21.06.2002 JP 2002182134
(43) Date of publication of application: 13.04.2005
(73) Proprietor: AISIN AW CO., LTD., Anjo-shi, Aichi 444-1192 (JP)
(72) Inventor: YAMADA, Kunihiro, Aisin AW Co., Ltd., Okazaki-shi, Aichi 444-8564 (JP); OGAWA, Satoshi, Aisin AW Co., Ltd., Okazaki-shi, Aichi 444-8564 (JP)
(74) Representative: TBK
(86) International application number: PCT/JP2003/007911
(87) International publication number: WO 2004/001336

(56) References cited:
- JP-A- 2001 034 889
- US-B1- 6 249 740
- US-B1- 6 314 369
- US-B1- 6 314 369

## Description

### TECHNICAL FIELD

The present invention relates to a navigation system and an information recording method program.

### BACKGROUND ART

In a conventional navigation device, a current position of a vehicle, that is, a current place is detected by means of GPS (global positioning system). At the same time, a vehicular azimuth, namely, a user vehicle azimuth, is detected based on a vehicular revolution angle velocity detected by a gyro sensor, that is, turning angle, to read out map data from a data recording section. A map screen is formed on a display of a display section and a current position, a surrounding map and the user vehicle azimuth are indicated on that map screen. Therefore, a driver, who is an operator, can drive a vehicle following the current position, surrounding map and the user vehicle azimuth indicated on the map screen.

If the driver sets up a target destination and a search condition, a route from the current position up to the target destination is searched for based on the search condition. Then, the searched route, that is, search route, is displayed on a search route display screen formed on the display or outputted with voice in the form of a message from a voice output section in order to notify the driver for a route guidance. Therefore, the driver can drive a vehicle along that notified search route.

The navigation device includes a communication section, and is capable of receiving, for example, jamming information as traffic information through the communication section and displaying the received jamming information on the map screen.

A system in which the driver transmits route guidance data to the navigation device preliminarily before the driver rides on a vehicle and when the driver rides on the vehicle and starts the driving, the route guidance can start up following the transmitted route guidance data has been proposed for a vehicle loaded with the navigation system (see Japanese Patent Application Laid-Open No.HEI 6-243395). In this case, the route guidance data obtained by driver's operating a personal computer at home or in office or the like to input a target destination, search condition and the like and search for the route is transmitted to the navigation device through radio or the like while the vehicle is parked.

In the document US 6,314,369 B1, there is disclosed a communications navigation system, in which data is transmitted and received between a navigation base apparatus provided at a navigation base and each of a plurality of navigation apparatuses provided in moving bodies such as vehicles using communication. A determining section of the navigation base apparatus determines untraveled route portion by comparing user's information stored in a user information storage with information of a recommended route provided by a route search section. The navigation base apparatus extracts necessary route/guidance information for untraveled route portion determined by the determining section from route/guidance data stored in a database, and then transmits the extracted route/guidance data to the navigation apparatus identified by the identification information. The route/guidance information may be transmitted to the navigation apparatus in the form of segmented data. In this way, it becomes possible for the navigation apparatus to extract only the route/guidance information needed by the user from the route/guidance data stored in the database.

However, according to the conventional navigation device and the conventional navigation system, as described above, if a time necessary for transmitting the route guidance data to the navigation device or for transmitting the route/guidance data to the navigation apparatus (hereinafter referred to as "communication required time") is long, the navigation device or the navigation apparatus needs to be powered on during that period. Therefore, electric power consumed by the navigation device or the navigation apparatus is increased, thereby a load applied to a battery mounted on the vehicle being increased tremendously.

### SUMMARY OF THE INVENTION

The present invention intends to solve the above-described problems of the conventional navigation device and the conventional navigation system and provide a navigation system and an information recording method program capable of shortening the communication required time.

According to various aspects of the present invention, in order to achieve the above object, there are provided a navigation system and an information recording method program, as defined in the claims.

By way of the present invention, from the surrounding data on a region near a vehicle travel starting point and other non-surrounding data in the navigation information, the non-surrounding data is compressed to create compressed data, while the surrounding data remains uncompressed, thereby the communication required time can be reduced.

Therefore, the load applied to the battery can be decreased.

### BRIEF DESCRIPTION OF THE DRAWINGS

FIG. 1 is a block diagram of a navigation system according to the present invention;
FIG. 2 is a diagram for explaining a navigation device according to the present invention;
FIG. 3 is a main flow chart indicating the operation of a personal computer according to a first embodiment which is an example useful for understanding the present invention;
FIG. 4 is a diagram showing the sub-routine of compression processing according to the first embodiment;
FIG. 5 is a flow chart showing the operation of the navigation device according to the first embodiment;
FIG. 6 is a diagram showing the data configuration of compressed data according to the first embodiment;
FIG. 7 is a diagram showing data configuration upon decompression processing according to the first embodiment;
FIG. 8 is a main flow chart showing the operation of a personal computer according to a second embodiment which is an example useful for understanding the present invention;
FIG. 9 is a main flow chart showing the operation of a personal computer according to a third embodiment which is an embodiment of the present invention;
FIG. 10 is a diagram showing the sub-routine of partial compression processing according to the third embodiment;
FIG. 11 is a main flow chart showing the operation of a navigation device according to the third embodiment;
FIG. 12 is a diagram showing the sub-routine of decompression processing according to the third embodiment;
FIG. 13 is a main flow chart showing the operation of a personal computer according to a fourth embodiment which is an embodiment of the present invention;
FIG. 14 is a main flow chart showing the operation of a navigation device according to a fifth embodiment which is an example useful for understanding the present invention;
FIG. 15 is a main flow chart showing the operation of a navigation device according to a sixth embodiment which is an embodiment of the present invention;
FIG. 16 is a diagram showing the sub-routine of compression processing according to a seventh embodiment which is an example useful for understanding the present invention;
FIG. 17 is a flow chart showing the operation of the navigation device according to the seventh embodiment;
FIG. 18 is a diagram showing the data configuration of compressed data according to the seventh embodiment;
FIG. 19 is a diagram showing the data configuration upon decompression processing of surrounding data according to the seventh embodiment;
FIG. 20 is a diagram showing the sub-routine of a partial compression processing according to an eighth embodiment which is an embodiment of the present invention;
FIG. 21 is a flow chart showing the operation of the navigation device according to the eighth embodiment;
FIG. 22 is a main flow chart showing the operation of a personal computer according to a ninth embodiment which is an example useful for understanding the present invention;
FIG. 23 is a diagram showing the sub-routine of compression processing according to the ninth embodiment; and
FIG. 24 is a diagram showing the data configuration upon decompression processing according to the ninth embodiment.

### BEST MODE FOR CARRYING OUT THE INVENTION

Hereinafter, the embodiments according to the present disclosure will be described in detail with reference to the accompanied drawings.

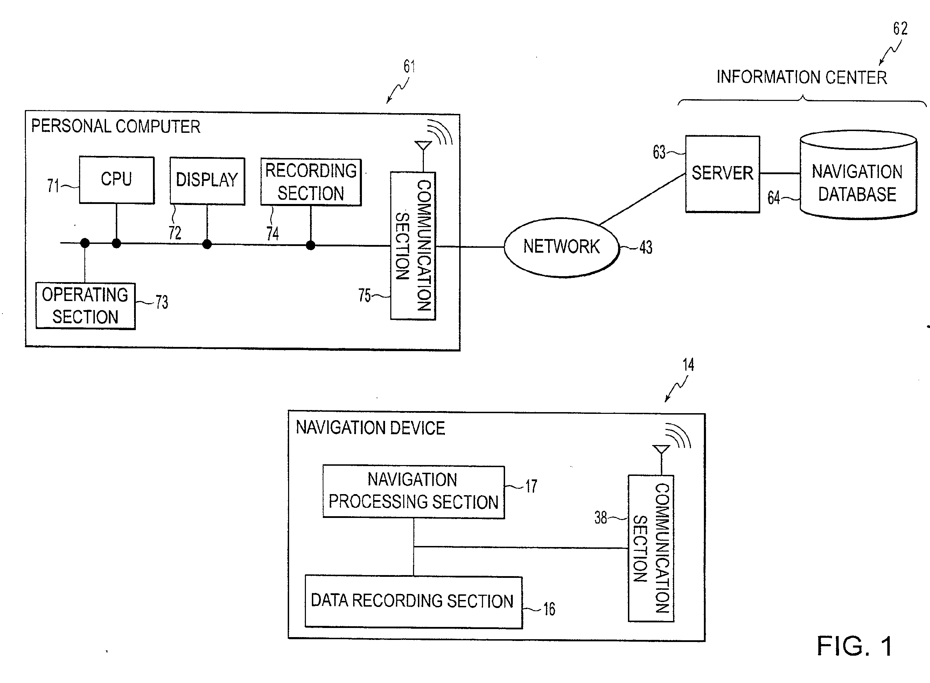

FIG. 1 is a block diagram of a navigation system according to the present invention.

In the Figure, reference numeral 61 denotes a personal computer as a user terminal and reference numeral 62 denotes an information center as an information provider. The personal computer 61, the information center 62 and the like are connected via a network 43. The information center 62 opens a site for providing a server of a predetermined provider with navigation data indicating navigation information.

Reference numeral 14 denotes a navigation device which is a vehicle on-board device mounted on a vehicle and the navigation device 14 includes a navigation processing section 17, a data recording section 16 as an information recording section, a communication section 38 and the like. The navigation system is constituted of the navigation device 14, the network 43, the personal computer 61, the information center 62 and the like.

The personal computer 61 includes a CPU 71 as an arithmetic operation unit and control unit, a display section 72 as a notifying unit for notifying an operator of variety of information, an operation section 73, a recording unit 74, a communication section 75 and the like. The communication section 75 contains a modem (not shown) for connecting the personal computer 61 to the information center 62, an access point (not shown) for connecting the personal computer 61 to the navigation device 14 via the communication section 38 by means of radio, and the like.

Although according to this example implementation, the CPU 71 is used as the arithmetic operation unit and control unit, MPU or the like may be used instead of the CPU 71. As the display section 72, such displays as CRT display, liquid crystal display, plasma display may be used. Although according to this example implementation, the display section 72 is used as a notifying unit, a voice display unit which notifies the operator of variety of information with voice may be used instead of the display section 72.

A keyboard, a mouse and the like may be used as the operation section 73 and also a touch panel formed on the above mentioned display may be used. Further, it is also permissible to use a bar code reader, a remote control unit for remote control operation, a joy stick, a light-pen, a stylus pen or the like. Operational regions such as various kinds of keys, switches, buttons and the like are formed on the display on the touch panel and touching (pressing) the operational region enables an input.

The recording unit 74 includes such internal storage units as RAM, ROM, flash memory, and as a recording medium, such an external storage unit as a hard disk is disposed. It is also permissible to use a flexible disc, magnetic tape, magnetic drum, CD-ROM, CD-R, MD, DVD, optical disc, MO, IC card, optical card, memory card or the like instead of the hard disk as the external storage unit. Note that, to use the external storage unit, the recording unit 74 includes a reading unit for reading out data recorded in the external storage unit and a writing unit for recording data.

Although according to this example implementation, the personal computer 61 is used as the user terminal, it is also permissible to use a device which can be connected to the network 43 and execute bi-directional communication, such as electronic notebook, portable phone, portable terminal, PDA (personal portable information terminal), TV phone, game machine and the like instead of the personal computer 61.

The information center 62 includes a server 63, a navigation database (DB) 64 which is connected to the server 63 and record navigation data and the like. The navigation database 64 includes a map data file in which map data for displaying a map is recorded, a search data file in which search data for searching for a route is recorded, a facility data file in which facility data on various kinds of facilities is recorded and the like. Data files such as road data file, intersection data file, node data file are formed in the map data file. Road data indicating information of each road (road link) is recorded in the road data file. Intersection data indicating information of each intersection is recorded in the intersection data file. The node data indicating information of each node point set along each road is recorded in the node data file. Note that the navigation data is constituted of the map data, search data, facility data and the like.

As the road data on the road itself, data representing road width, gradient, cant, bank, road condition, number of lanes, a location in which the number of lanes decreases, a location in which the road width decreases, railroad crossing and the like are recorded. About the comer, data representing curvature radius, intersection, T-shaped crossing, comer entrance/exit and the like are recorded. About the road attribute, data representing a descending road, an ascending road and the like are recorded. And about the road type, as well as data representing general roads such as national road, prefectural road, narrow street, data representing highway/toll roads such as express road, urban express road, toll road are recorded. Further, regarding the highway/toll roads, data representing a road attached to an entrance/exit (ramp way), a toll booth and the like are recorded.

As the node data, data representing a branch point (including intersection, T-shaped crossing and the like) of an actual road, coordinate (position) of a node point set at every predetermined distance corresponding to the curvature radius or the like of each road, a link between the nodes which connects respective node points, height of each node point (altitude) and the like are recorded.

As the facility data, data representing hotels, gas stations, parking lots, sightseeing facilities of each area are recorded. In the navigation database 64, voice output data for outputting predetermined information through a voice output section (not shown) of the navigation unit 14 are recorded.

The information center 62 is capable of receiving not only traffic information including jamming information, restriction information, parking lot information, traffic accident information, service area crowded condition and the like, which are transmitted from traffic information transmission center as a traffic information provider in information providers, for example, VICS (registered trademark) (road traffic information communication system: vehicle information and communication system)(not shown) center, but also general information such as news, weather forecast. This is capable of sending the traffic information and general information to the personal computer 61 through the network 43 and recording the traffic information and general information in the navigation database 64. For that purpose, a statistical data file (not shown) is formed in the navigation database 64, and as well as old traffic information and general information are recorded in time series as the statistical data, the old traffic information and general information are subjected to a specific processing as original data to record the processed traffic information and general information. Note that, when the traffic information and general information are processed, the general information is referred to if necessary.

The information center 62 is capable of sending not only the traffic information and general information but also video information of TV program and the like and music information of music program and the like to the personal computer 61 through the network 43.

. The information center 62 may be an individual, corporate, organization, local government, national governmental agency or the like. The information center 62 creates the navigation data for itself or purchases from other information creators for distribution.

As the network 43, it is permissible to use various kinds of communication means including LAN (Local Area Network), WAN (Wide Area Network), intranet, portable phone system network, telephone line network, public communication line network, private communication network, internet and the like. Further, it is permissible to use communication means using CS broadcasting and BS broadcasting based on a broadcasting satellite, ground wave digital TV broadcasting, FM multiplexed broadcasting and the like. It is permissible to use communication means such as non-stop electronic toll collection system (ETC) used in intelligent transport system (ITS), dedicated short-range communication (DSRC) and the like. Note that the personal computer 61, the server 63, the provider's server, the navigation processing section 17 and the like work independently or are combined to function as a computer based on each predetermined program, data and the like.

Next, the navigation device 14 having the above-described structure will be described.

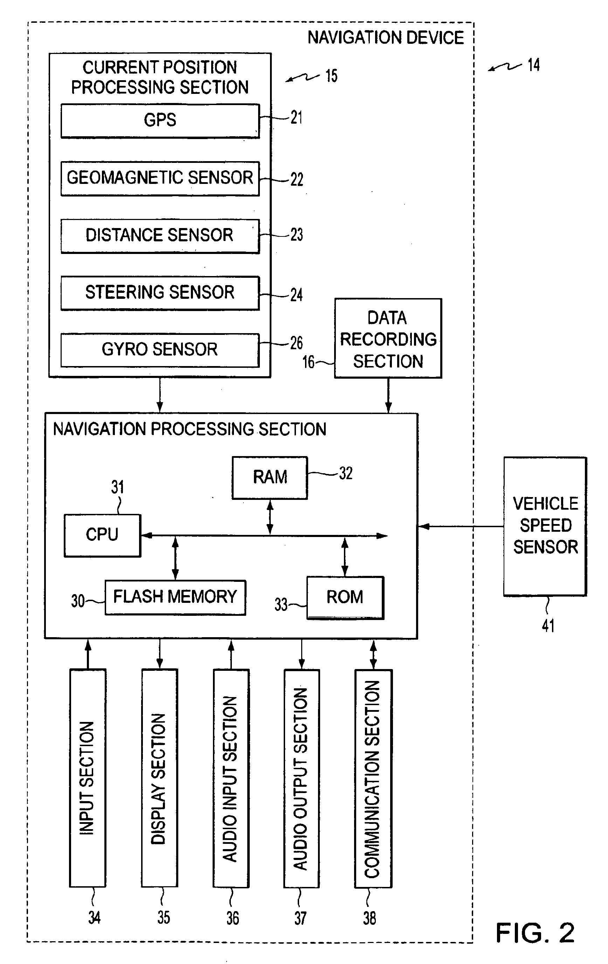

FIG. 2 is a diagram for explaining the navigation device according to the present invention.

As shown in the Figure, the navigation device 14 includes a current position detection processing section 15 for detecting a current position and the like, the data recording section 16 in which various kinds of data are recorded, the navigation processing section 17 for executing various kinds of arithmetic operation processing based on inputted information, an input section 34 as a first operating section, a display section 35 as a first notifying section, a voice input section 36 as a second operating section, a voice output section 37 as a second notifying section, and the communication section 38. A vehicle velocity sensor 41 is connected to the navigation processing section 17.

The current position detection processing section 15 includes a GPS 21 as a current position detecting section, a geomagnetic sensor 22, a distance sensor 23, a steering sensor 24, a gyro sensor 26 as an azimuth detecting section, and an altimeter (not shown) and the like.

The GPS21 detects a current position on the earth by receiving an electronic wave generated by an artificial satellite, the geomagnetic sensor 22 detects the azimuth of an the user vehicle by measuring geomagnetism, and the distance sensor 23 detects a distance between predetermined positions on the road. Regarding the distance sensor 23, it is permissible to use a type which measures a revolution velocity of wheels (not shown) and detects a distance based on the revolution velocity, a type which measures an acceleration and detects a distance by integrating the acceleration twice or the like.

The steering sensor 24 detects a steering angle, and regarding the steering sensor 24, it is permissible to use, for example, an optical revolution sensor attached to a revolution section of a steering wheel (not shown), a revolution resistance sensor, an angle sensor attached to wheels and the like.

The gyro sensor 26 detects a turning angle, and regarding the gyro sensor 26, for example, a gas rate gyro, a vibration gyro and the like are used. By integrating the turning angles detected by the gyro sensor 26, the azimuth of the user vehicle can be detected.

Note that the GPS 21 is capable of detecting a current position by itself. And the current position can be detected also by combining a distance detected by the distance sensor 23 with the azimuth of an the user vehicle detected by the geomagnetic sensor 22, a turning angle detected by the gyro sensor 26, or a steering angle detected by the steering sensor 24.

The navigation processing section 17 includes internal storage units such as a CPU 31 which works as an arithmetic operation unit and control unit for entirely controlling the navigation device 14, a RAM 32, which is used as a working memory when that CPU 31 executes various kinds of arithmetic operations, a ROM 33 which stores various kinds of programs for search for a route up to a target destination, route guidance, determination of specific interval and the like as well as a program for control, a flash memory 30, which is a recording medium for database for recording navigation data transmitted from the personal computer 61. The input section 34, the display section 35, the voice input section 36, the voice output section 37 and the communication section 38 are connected to the navigation processing section 17. Note that a semiconductor memory, a magnetic core and the like are used for the RAM 32, the ROM 33, the flash memory 30 and the like. Then, it is permissible to use the MPU and the like instead of the CPU 31 as the arithmetic operation unit and control unit.

The data recording section 16 can set a hard disk (not shown) as a recording medium, and includes a recording head (not shown) as a driver to read out a predetermined program, data and the like recorded in the hard disk and write predetermined data into the hard disk.

Although, according to this example Implementation, the hard disk is used as an external storage unit, a magnetic disk such as a flexible disk can be used as an external storage unit instead of the hard disk. Further, the memory card, magnetic tape, magnetic drum, CD, MD, DVD, optical disk, MO, IC card, optical card and the like may be used as an external storage unit.

Although according to this example implementation, the ROM 33 stores various kinds of programs and the data recording section 16 records various kinds of data, program, data and the like can be recorded in the same external storage unit. In this case, for example, the program, data and the like can be read out from the external storage unit and written into the flash memory 30. Therefore, the program, data and the like can be updated by replacing the external storage unit. If an automatic transmission control unit for controlling an automatic transmission (not shown) loaded on a vehicle is installed, a program, data and the like for controlling the automatic transmission control unit can be also recorded in the external storage unit.

The input section 34 is used for correcting a current position when a vehicle starts, inputting a departure point as a guidance starting point and a target destination as a guidance end point, and operating the communication section 38, and constituted of control switches (not shown) such as various kinds of keys, switches, buttons and the like. Further, as the input section 34, it is permissible to use the keyboard, mouse, bar code reader, remote control unit for remote control operation, joy stick, light-pen, stylus pen and the like. The input section 34 may be formed by operation switches such as various kinds of keys, switches, buttons and the like shown as images on a screen formed on a display (not shown) of the display section 35. In this case, the input is carried out by touching the operation switches.

Operation guidance, operation menu, key guidance, search route from a departure point to a target destination, guidance information along the search route, program of FM multiplexed broadcasting and the like are shown on various kinds of screens formed on the display. Regarding the display section 35, displays such as CRT display, liquid crystal display, plasma display may be used, and further, a hologram unit for projecting a hologram on a vehicle windshield may be used.

The voice input section 36 is constituted of a microphone or the like (not shown) and capable of inputting necessary information with voices. The voice output section 37 includes an voice synthesizer and a speaker (not shown), and the search route, guidance information and the like are outputted with voice synthesized by the voice synthesizer from the voice output section 37. Note that, it is possible to output not only voice synthesized by the voice synthesizer, but also various kinds of sounds and variety of guidance information recorded in advance in a tape, memory or the like.

The communication section 38 includes a beacon receiver which is a first receiver for receiving traffic information constituted of variety of information such as jamming information, restriction information parking lot information, traffic accident information and service area crowded information, transmitted from the traffic information transmission center, for example, the VICS (registered trade mark) center, in the form of electric wave beacon, light beacon or the like via electric wave beacon unit, light beacon unit or the like (not shown) disposed along a road, and a FM receiver as a second receiver for receiving FM multiplexed information constituted of general information such as news, weather forecast in the form of FM multiplexed broadcasting via FM broadcasting station. Although the beacon receiver and FM receiver are gathered into a unit and disposed as the VICS receiver, they may be disposed separately.

The communication section 38 is capable of receiving various kinds of data such as D-GPS information for detecting a detection error in the GPS 21. Additionally, it is capable of receiving position information based on the electric wave beacon, light beacon and the like to detect the current position, and in that case, the beacon receiver functions as a current position detecting section.

The navigation device 14 and the personal computer 61 (FIG. 1) are connected to each other by wireless LAN which enables bi-directional communication and for that purpose, the communication section 75 is provided with access points as described above while slots (not shown), such as PCMCIA slot, PC card slot are formed in the communication section 38, so that a radio card (not shown) is inserted into the slot. Although according to this example implementation, the navigation device 14 and the personal computer 61 are connected to each other by the wireless LAN, according to another example implementation, the navigation device 14 and the personal computer 61 are connected by the wired LAN. In this case, the communication section 75 is provided with hubs, so that the hubs and the communication section 38 are coupled detachably by a cable.

Next, the operation of the navigation system having the above-described structure will be described.

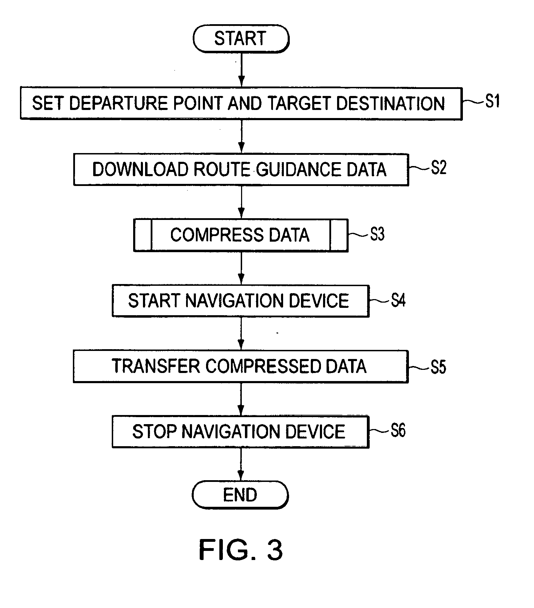

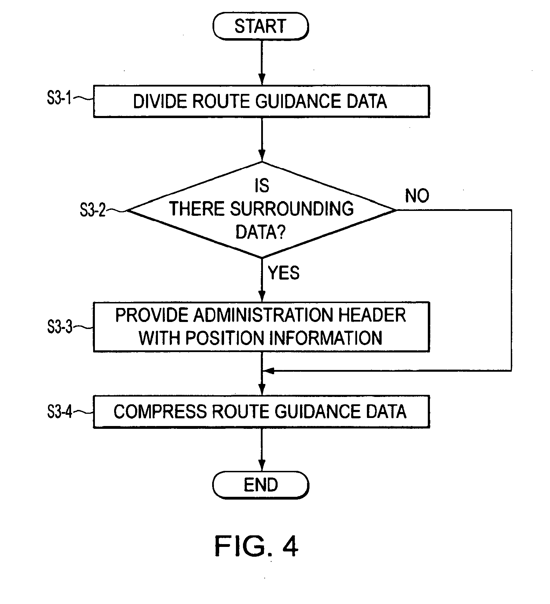

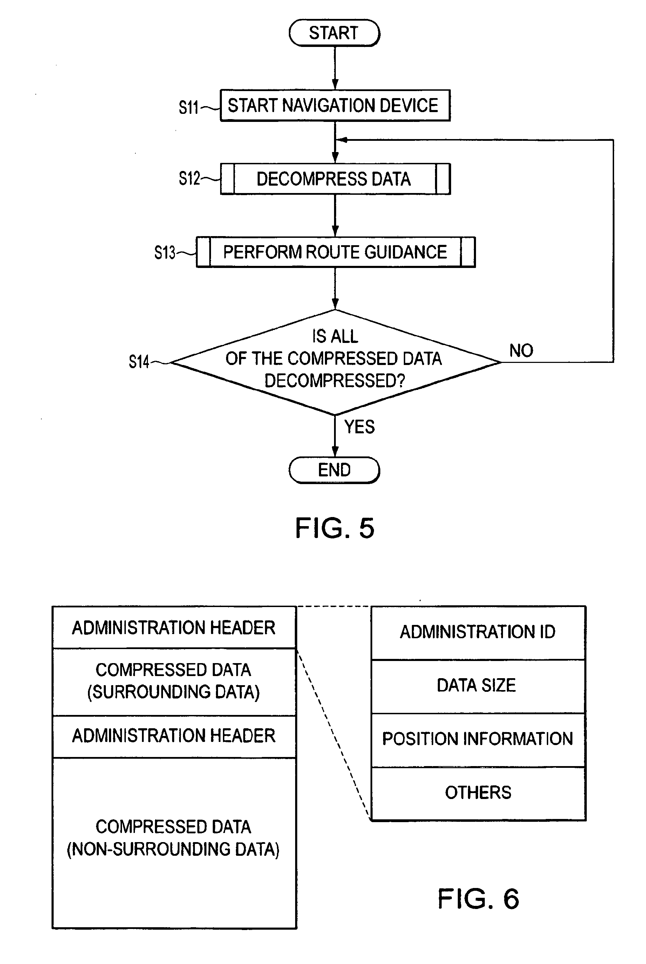

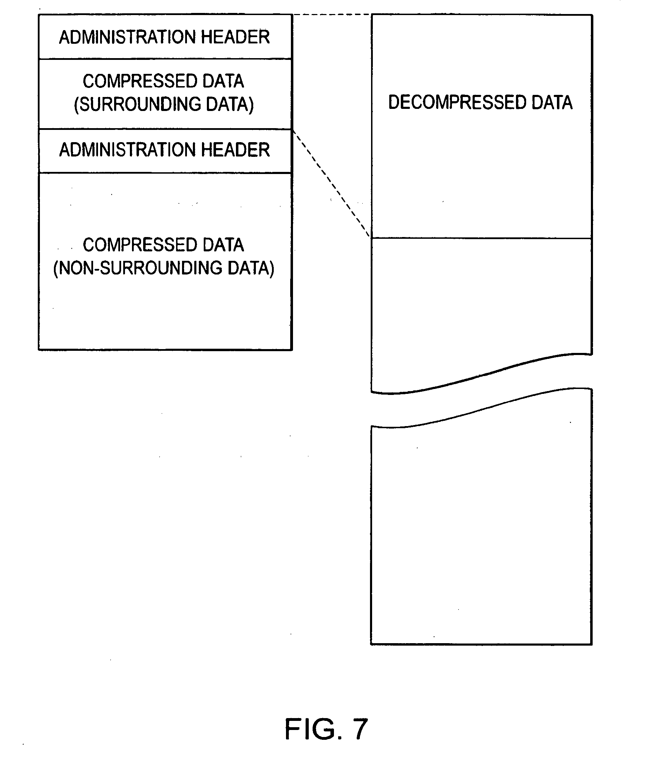

FIG. 3 is a main flow chart indicating the operation of a personal computer according to a first embodiment which is an example useful for understanding the present invention. FIG. 4 is a diagram showing the sub-routine of compression processing according to the first embodiment. FIG. 5 is a flow chart showing the operation of the navigation device according to the first embodiment. FIG. 6 is a diagram showing the data structure of the compressed data according to the first embodiment. FIG. 7 is a diagram showing the data structure upon decompression processing according to the first embodiment.

First, if an operator inputs a departure point and a target destination by operating the operation section 73 of the personal computer 61 (FIG. 1), search condition setting processing means (not shown) of the CPU 71 executes search condition setting processing, in which the departure point and target destination are set as the search condition, and the search condition is transmitted to the information center 62.

If as the user terminal, for example, a PAD or the like is used instead of the personal computer 61 and at the same time, the GPS card can be set in such slots as the PCMCIA slot in the PDA, PC card slot, a current position detected by the GPS card can be set as the departure point.

If search condition is received by the server 63 in the information center 62, information obtainment processing means (not shown) of the server 63 executes information obtainment processing, reads out the search data by referring to the search data file in the navigation database 64, reads out statistical data by referring to statistical data file, and reads traffic information transmitted by the VICS (registered trade mark) so as to obtain information necessary for searching a route.

Subsequently, the search processing means (not shown) in the server 63 executes search processing, in which a route is searched based on search data, traffic information, statistical data and the like according to the search condition.

If a route is searched for by the search processing means, the route guidance data transmission processing means (not shown) of the server 63 carries out route guidance data transmission processing to transmit route data indicating a search route, map data indicating a map of a surrounding area of the search route, voice output data for guiding along the search route through the voice output section 37 (FIG. 2) and the like to the personal computer 61 as the route guidance data indicating information for route guidance.

The route data contains road data (road attribute and the like) which constitutes the search route, and the map data contains mesh information such as mesh containing the search route, mesh adj acent to the mesh.

The each mesh is constituted of map data of a square region surrounded by a predetermined length. The each region is set such that the quantity of the map data, that is, data quantity is within a specified range, and the each mesh is supplied with a parcel number as an identification number and is controlled based on the parcel number. The area of the region differs between a region having a large amount of information contained in the map data like urban area and a region having a small amount of map data like suburban area. For example, if the mesh is composed of data amount unit of 128 [K byte], the mesh in a standard region is constituted of map data of a 4-Km square region while the mesh in the region having a large amount of information contained in the map data is constituted of map data of a 2-Km square region, and the mesh in the region having a small amount of information contained in the map data is constituted of map data of an 8-Km square region.

Although according to this embodiment, the search processing means searches for a route based on search data, traffic information, statistical data and the like, according to another embodiment, the search processing means searches for a route based on only the search data. In this case, the route guidance data transmission processing means transmits route data indicating a search route to the personal computer 61 as route guidance data.

Although according to this embodiment, the voice output data is transmitted from the information center 62 to the personal computer 61, according to another embodiment, the voice output data is recorded in the data recording section 16 of the navigation device 14 in advance. In this case, the voice output data does not need to be transmitted as the route guidance data.

In the personal computer 61, if the route guidance data is transmitted, reception processing means (not shown) of the CPU 71 carries out reception processing to receive the route guidance data, and subsequently, recording processing means (not shown) of the CPU 71 executes recording processing to download the route guidance data into a hard disk in the recording unit 74 for recording.

When a vehicle is parked in a garage, for example, the operator can transfer (transmit) the route guidance data, which is downloaded into the hard disk, to the navigation device 14 by operating the operation section 73 and record it in the flash memory 30, for example, in the navigation processing section 17.

If communication required time for transmitting the route guidance data to the navigation device 14 is long, the power supply (not shown) in the navigation device 14 needs to be kept on during this time. Therefore, electric power consumed by the navigation device 14 increases and consequently a load applied to a battery (not shown) mounted on the vehicle increases tremendously.

If the communication required time is long, the operator needs to monitor the personal computer 61 during this time. Thus, not only the monitoring work is troublesome, but also cost for transmission, that is, communication cost is increased.

Thus, according to this embodiment, the compression processing means (not shown) in the CPU 71 executes compression processing to compress the route guidance data downloaded into the hard disk to produce compressed data, and the compressed data is transferred to the navigation device 14.

In this case, the navigation device 14 needs to decompress the compressed data to return it to the route guidance data. If that route guidance data cannot be used until all the compressed data is decompressed, the vehicle cannot be started immediately along a search route.

The compression processing means reads out the route guidance data from the hard disk and after the navigation device 14 starts up, the route guidance data is divided into surrounding data and other non-surrounding data depending on whether or not a driver needs it immediately, that is, the priority order on whether or not the data needs to be provided to the driver giving priority. Note that the surrounding data refers to the route guidance data on a region near a departure point indicating a point where the vehicle starts (a current position in case where the search route is from the current position to a target destination), for example, a route guidance data in a mesh containing the departure point. The non-surrounding data refers to the route guidance data in a mesh not containing the departure point. It is also possible to combine the route guidance data of one or more meshes adjacent to the mesh containing the departure point to produce another surrounding data, if necessary.

Then the compression processing means compresses the route guidance data on the surrounding data and non-surrounding data to create compressed data supplied with an administration header, and the compressed data is recorded in the flash memory of the recording unit 74. Note that the administration header is information for controlling the compressed data and as shown in FIG. 6, constituted of an administration ID indicating data No. of compressed data, data size indicating the size of the compressed data, other data, and the like.

Thus, the compression processing means determines whether or not a divided route guidance data is surrounding data. If the divided route guidance data is the surrounding data, the administration header is supplied with information indicating the surrounding data accompanied by the compression, and according to this embodiment, information about the position indicating a starting point of the route guidance data which constitutes the compressed data, that is, position information and the like. Although, according to this embodiment, the position information is represented by, for example, coordinate, it may be represented by road number, node number or the like.

If the compressed data is recorded, compressed data transmission processing means (not shown) of the CPU 71 executes compressed data transmission processing to transfer the compressed data to the navigation device 14. Thus, if the operator operates the operation section 73 to give instruction for activating the navigation device 14, the navigation device start-up processing means of the compressed data transmission processing means executes navigation device start up processing to turn on the power of the navigation device 14 to start the navigation device 14. Subsequently, the data transmission processing means of the compressed data transmission processing means executes data transfer processing to read out compressed data from the flash memory of the recording unit 74 and transfer to the navigation device 14. Accompanied by this, in the navigation device 14, compressed data recording processing means (not shown) of the CPU 31 executes compressed data recording processing to record compressed data into the flash memory 30.

If all the compressed data is recorded in the flash memory 30, navigation device stop processing means of the compressed data transmission processing means executes navigation device stop processing to stop the navigation device 14, so that the compressed data is brought into a waiting condition in which it is available.

As described above, when the route guidance data is transferred from the personal computer 61 to the navigation device 14, the route guidance data is compressed to produce compressed data. Thus, the data size of that compressed data can be reduced. Therefore, communication required time is shortened and a time in which the navigation device 14 is kept powered on can be reduced. Thus, power consumed by the navigation device 14 is decreased, and consequently, load applied to a battery mounted on a vehicle can be reduced.

Further, because the communication required time is short, the work by the operator can be simplified, thereby communication cost is reduced.

Next, the operation of the navigation device 14 when a vehicle is driven will be described.

First, if the ignition switch of a vehicle is turned on, the navigation device 14 starts up. Then, a current position is detected by the GPS 21 and the azimuth of an the user vehicle is detected based on a turning angle of the vehicle detected by the gyro sensor 26.

Next, decompression processing means (not shown) of the CPU 31 executes decompression processing to decompress compressed data on the surrounding data giving priority based on a current position and position information. Thus, the decompression processing means reads the current position and reads out compressed data from the flash memory 30 to read the position information with reference to the administration header of the compressed data. Subsequently, the decompression processing means determines whether given compressed data is surrounding data by comparing a current position with position information and if the compressed data is surrounding data, it decompresses the compressed data for the surrounding data as shown in FIG. 7 to create decompressed data and then, records route guidance data which is the decompressed data into a hard disk in the data recording section 16. Note that it may be recorded in another region of the flash memory 30 instead of the hard disk.

If the decompression processing means fails in the decompression processing, it can execute the decompression processing again by reading out the compressed data from the flash memory 30.

Route guidance processing means (not shown) of the CPU 31 executes route guidance processing to read out route guidance data from the hard disk in the data recording section 16, forms a map screen on a display of the display section 35 based on the route guidance data, indicates a current position, surrounding map and azimuth of an the user vehicle on the map screen, and also displays a search route in a surrounding area of the current position, and notifies a driver of the search route through a message from the voice output section with voice in order to execute route guidance.

Accordingly, the driver can drive a vehicle following the current position, surrounding map, azimuth of the user vehicle and search route displayed on the map screen.

If decompression of compressed data on the surrounding data is completed and the route guidance data is recorded in the hard disk in this way, the decompression processing means reads out remaining compressed data from the flash memory 30, creates decompressed data by decompressing the compressed data on the non-surrounding data and records the route guidance data which is the decompressed data into the hard disk in the data recording section 16. Note that, it may be recorded in another region of the flash memory 30 instead of the hard disk.

Regarding the surrounding data, its decompression processing is carried out immediately after the ignition switch is turned on and the navigation device 14 starts up. Thus, the vehicle can be driven immediately using the route guidance data.

Although according to this embodiment, the decompression processing is carried out after the ignition switch is turned on, according to another embodiment, the decompression processing is carried out at a predetermined timing after the ignition switch is turned on, for example, after the traveling of the vehicle is started.

According to yet another embodiment, after the compressed data recording processing means records compressed data into the flash memory 30, the following processing is carried out before the navigation device stop processing means stops the navigation device 14, in order to decompress the compressed data and record the route guidance data. First, if a current position is detected by the GPS 21, the decompression processing means reads the current position and reads out compressed data from the flash memory 30, and reads position information with reference to the administration header of the compressed data. Then, the decompression processing means determines whether or not the compressed data is surrounding data by comparing the current position with position information, and if the compressed data is surrounding data, the compressed data of the surrounding data is decompressed to create decompressed data. The route guidance data, which is the decompressed data, is recorded in the hard disk of the data recording section 16. Note that it also can be recorded in another region of the flash memory 30 instead of the hard disk.

After the ignition switch is turned on, the decompression processing means reads out remaining compressed data form the flash memory 30, decompresses the compressed data of the non-surrounding data to create decompressed data, and then, records the route guidance data, which is the decompressed data, into the hard disk of the data recording section 16. Note that it also can be recorded in another region of the flash memory 30 instead of the hard disk.

Next, the flow chart of FIG. 3 will be described.
Step S1: sets a departure point and a target destination.
Step S2: downloads route guidance data.
Step S3: executes compression processing.
Step S4: starts up a navigation device 14.
Step S5: transfers compressed data.
Step S6: stops the navigation device 14 and completes processing.

Next, the flow chart of FIG. 4 will be described.
Step S3-1: divides route guidance data.
Step S3-2: determines whether or not it is surrounding data. If it is surrounding data, the procedure proceeds to step S3-3, and if it is not surrounding data, the procedure proceeds to step S3-4.
Step S3-3: provides the administration header with position information.
Step S3-4: compresses route guidance data and returns it.

Next, the flow chart of FIG. 5 will be described.
Step S11: starts up the navigation device 14.
Step S12: executes decompression processing.
Step S 13: executes route guidance processing.
Step S 14: determines whether or not all compressed data is decompressed. If all the compressed data is decompressed, the processing is completed, and if it is not decompressed, the procedure is returned to step S12.

Next, a second embodiment in which compression processing is executed by the information center 62 will be described, wherein the second embodiment is an example useful for understanding the present invention.

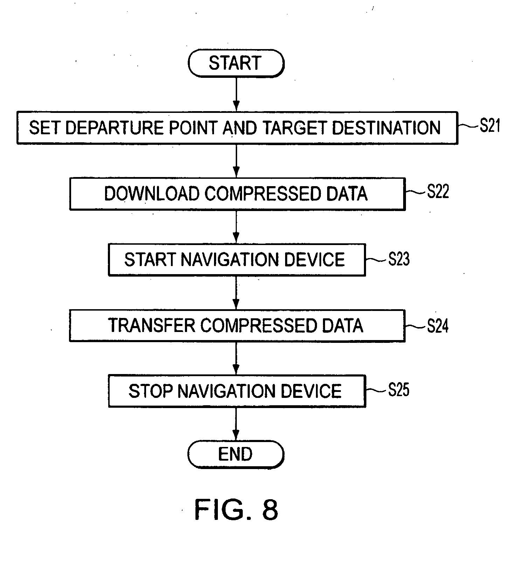

FIG. 8 is a main flow chart showing the operation of a personal computer according to the second embodiment.

First, if the operator inputs a departure point and a target destination by operating the operating section 73 of the personal computer 61 (FIG. 1) as a user terminal, the search condition set processing means of the CPU 71 executes search condition set processing, in which the departure point and the target destination are set as a search condition and then, the search condition is transmitted to the information center 62 which is an information provider.

If the search condition is received by the server 63, the information obtainment processing means of the server 63 executes information obtainment processing to obtain information necessary for searching for a route by reading the search data with reference to search data file in the navigation database 64, reading statistical data with reference to the statistical data file and reading traffic information transmitted from the VICS (registered trade mark) center.

Then, the search processing means of the server 63 executes search processing to search for a route based on search data, traffic information, statistical data and the like according to the search condition.

If a route is searched for by the search processing means, compression processing means (not shown) of the server 63 executes compression processing, in which route guidance data for indicating information for the route guidance, such as route data indicating a search route, map data indicating a map of a surrounding region of the search route, a voice output data for guiding along the search route through the voice output section 37 and the like, is compressed to create compressed data and the compressed data is recorded in a recording unit (not shown) in the server 63.

Also in this case, the compression processing means divides the route guidance data into surrounding data and non-surrounding data to create compression data supplied with an administration header. Then, the surrounding data of the route guidance data is provided with position information accompanied by the compression.

Subsequently, the compression data transmission processing means (not shown) of the server 63 executes compression data transmission processing to transmit the compressed data to the personal computer 61.

If the compressed data is transmitted, the recording processing means of the CPU 71 executes recording processing to download the compressed data into the hard disk of the recording unit 74 for recording. As described above, the compressed data transmission processing means of the CPU 71 transmits the compressed data to the navigation device 14 as an on-board device.

Since the operation of the navigation device 14 after compressed data is transferred is the same as that of the first embodiment, description thereof is omitted.

Since according to this embodiment, the surrounding data is decompressed immediately after the ignition switch is turned on and the navigation device 14 starts up, the vehicle can be started immediately utilizing the route guidance data.

Although according to this embodiment, the decompression processing is executed after the ignition switch is turned on, according to another embodiment, the decompression processing is executed at a predetermined timing after the ignition switch is turned on, for example, after the traveling of a vehicle is started.

According to yet another embodiment, the following processing is carried out after the compressed data recording processing means records compressed data in the flash memory 30 and before the navigation device stop processing means stops the navigation device 14, and decompression of the compressed data and recording of the route guidance data are carried out. First if a current position is detected by the GPS 21, the decompression processing means reads the current position, reads out the compressed data from the flash memory 30, and then reads position information with reference to the administration header of the compressed data. Subsequently, the decompression processing means determines whether or not the compressed data is surrounding data by comparing the current position with position information, and if the compressed data is surrounding data, it decompresses the compressed data of the surrounding data to create decompressed data, and then records the route guidance data, which is the decompressed data, into the hard disk of the data recording section 16. Note that it is also possible to record the data in another region of the flash memory 30 instead of the hard disk.

If decompression of the compressed data of the surrounding data is completed and the route guidance data is recorded in the hard disk, the decompression processing means reads out remaining compressed data from the flash memory 30, decompresses the compressed data of the non-surrounding data to create decompressed data, and records the route guidance data, which is the decompressed data, into the hard disk of the data recording section 16. Note that it is also possible to record the data in another region of the flash memory 30 instead of the hard disk.

Next, the flow chart will be described.
Step S21: sets a departure point and a target destination.
Step S22: downloads compressed data.
Step S23: starts up the navigation device 14.
Step S24: transfers compressed data.
Step S25: starts up the navigation device 14 and terminates the processing.

According to the first and second embodiments, the route guidance data is divided into surrounding data and non-surrounding data, and the surrounding data is compressed with its administration header supplied with position information, while the non-surrounding data is compressed as it is. Here, an embodiment of the present invention, denoted as the third embodiment, in which the surrounding data is free of the compression, will be described.

In this case, if the data amount of the surrounding data is large and a predetermined compression condition is established, the surrounding data is compressed. If the data amount is small and the compression condition is not established, the surrounding data is not compressed. For example, a communication required time when the surrounding data is transferred from the personal computer 61 to the navigation device 14 without being compressed is assumed to be τ 1, the communication required time for the compressed data of the surrounding data is assumed to be τ 2, and a time necessary for decompressing the compressed data (hereinafter referred to as "decompression time") is assumed to be τ 3. At this time, if the communication required times τ 1, τ 2 and the decompression time τ 3 have the relation of τ 1> τ 2 + τ 3, a compression condition is established, and if there is a relation of τ 1≤ τ 2 + τ 3, the compression condition is not established.

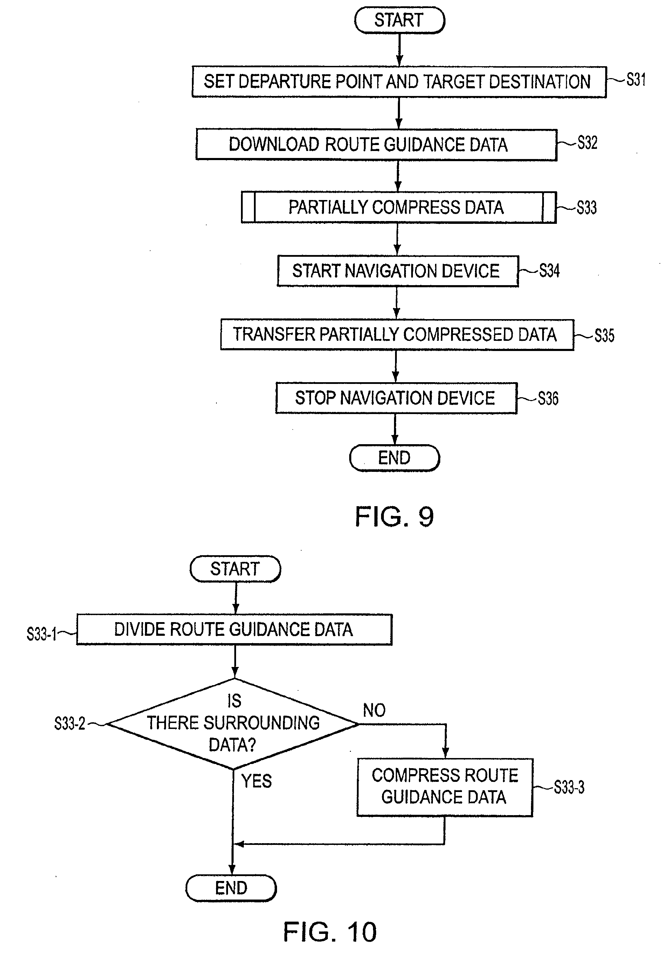

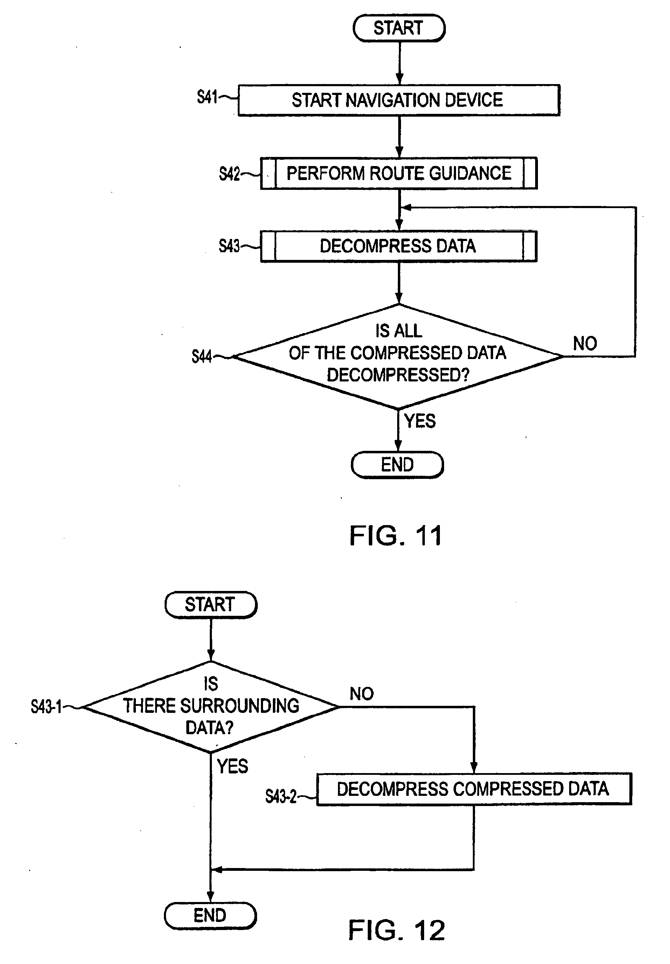

FIG. 9 is a main flow chart showing the operation of the personal computer according to the third embodiment which is an embodiment of the present invention. FIG. 10 is a diagram showing the sub-routine of a partial compression processing according to the third embodiment. FIG. 11 is a main flow chart showing the operation of the navigation device according to the third embodiment. FIG. 12 is a diagram showing the sub-routine of decompression processing according to the third embodiment.

First, if the operator inputs a departure point and a target destination by operating the operating section 73 of the personal computer 61 (FIG. 1) which is a user terminal, the search condition set processing means of the CPU 71 executes search condition set processing, in which the departure point and target destination are set as search condition and then, the search condition is transmitted to the information center 62 which is an information provider.

If the search condition is received by the server 63, the information obtainment processing means of the server 63 executes information obtainment processing to obtain information necessary for searching for a route by reading the search data with reference to search data file in the navigation database 64, reading statistical data with reference to the statistical data file, and reading traffic information transmitted from the VICS (registered trade mark) center.

Then, the search processing means of the server 63 executes search processing to search for a route based on search data, traffic information, statistical data and the like according to the search condition.

If a route is searched for by the search processing means, the route guidance data transmission processing means of the server 63 executes route search data transmission processing, in which route data indicating a search route, map data indicating a surrounding map of the search route, voice output data for guiding along the search route by the voice output section 37 (FIG. 2) and the like are transmitted to the personal computer 61 as route guidance data indicating information for the route guidance.

If the route guidance data is transmitted, the recording processing means of the CPU 71 executes recording processing, in which the route guidance data is downloaded into the hard disk of the recording unit 74.

Next, the partial compression processing means of the compression processing means of the CPU 71 executes a partial compression processing to read out the route guidance data from the hard disk and divide the route guidance data into surrounding data and non-surrounding data. Subsequently, the partial compression processing means records the surrounding data as it is in the from of the route guidance data into the flash memory, while as for the non-surrounding data, the route guidance data is compressed to create compressed data supplied with an administration header to create partially compressed data and then recorded in the flash memory of the recording unit 74.

If the partially compressed data is created in this way, the compressed data transmission processing means of the CPU 71 transmits the partially compressed data to the navigation device 14 as an on-board device. If the operator instructs a start-up of the navigation device 14 by operating the operating section 73, the navigation device start-up processing means of the compressed data transmission processing means executes navigation device start-up processing, to turn on the navigation device 14 to start the navigation device 14. Subsequently, the data transferring processing means of the compressed data transmission processing means executes data transferring processing to read out the partially compressed data from the flash memory of the recording unit 74 and transmit it to the navigation device 14. Accompanied by this, the partially compressed data recording processing means (not shown) of the CPU 31 in the navigation device 14 executes partially compressed data recording processing to record the partially compressed data into the flash memory 30.

If all the partially compressed data is recorded in the flash memory 30, the navigation device stop processing means of the compressed data transmission processing means executes navigation device stop processing to stop the navigation device 14 and bring the partially compressed data into a waiting condition in which it is available.

Next, the operation of the navigation device 14 when a vehicle is driven will be described.

If the ignition switch of a vehicle is turned on, the navigation device 14 starts up, so that a current position is detected by the GPS 21 as a current position detecting section, and the azimuth of an the user vehicle is detected based on the turning angle of the vehicle detected by the gyro sensor 26.

Then, the route guidance processing means of the CPU 31 executes route guidance processing to read out partially compressed data from the flash memory 30, and for the surrounding data, it forms a map screen on the display of the display section 35 based on the non-compressed route guidance data in the partially compressed data. The same means displays a current position, a surrounding map and the azimuth of an the user vehicle and further a search route in the surrounding of the current position, and notifies a driver of the search route with a message from the voice output section for the route guidance.

If the route guidance starts up in this way, the decompression processing means of the CPU 31 executes decompression processing and for the non-surrounding data, it decompresses the compressed data of the partially compressed data to create decompressed data and records the route guidance data, which is the decompressed data, into the hard disk of the data recording section 16. Note that the data may be recorded in another region of the flash memory 30 instead of the hard disk.

As for the surrounding data, if the ignition switch is turned on to activate the navigation device 14, the route guidance data is read without being decompressed, so that a vehicle can be run immediately using the route guidance data.

Next, the flow chart of FIG. 9 will be described.
Step S31: sets up a departure point and a target destination.
Step S32: downloads the route guidance data.
Step S33: executes a partial compression processing.
Step S34: starts up the navigation device 14.
Step S35: transfers partially compressed data.
Step S36: starts up the navigation device 14 and terminates the processing.

Next, the flow chart of FIG. 10 will be described.
Step S33-1: divides the route guidance data.
Step S33-2: determines whether or not it is surrounding data. If it is surrounding data, return is executed and if it is not surrounding data, the procedure proceeds to step S33-3.
Step S33-3: compresses the route guidance data and return is executed. Next, the flow chart of FIG. 11 will be described.
Step S41: starts up the navigation device.
Step S42: executes route guidance processing.
Step S43: executes decompression processing.
Step S44: determines whether or not all compressed data is decompressed. If all compressed data is decompressed, the processing is terminated and otherwise, the procedure is returned to step S43.

Next, the flow chart of FIG. 12 will be described.
Step S43-1: determines whether or not it is surrounding data. If it is surrounding data, return is executed and otherwise, the procedure proceeds to step S43-2.
Step S43-2: decompresses compressed data and return is executed.

Next, an embodiment of the present invention, denoted as the fourth embodiment, in which the compression processing is executed by compressing the non-surrounding data without compressing the surrounding data by the information center 62, will be described.

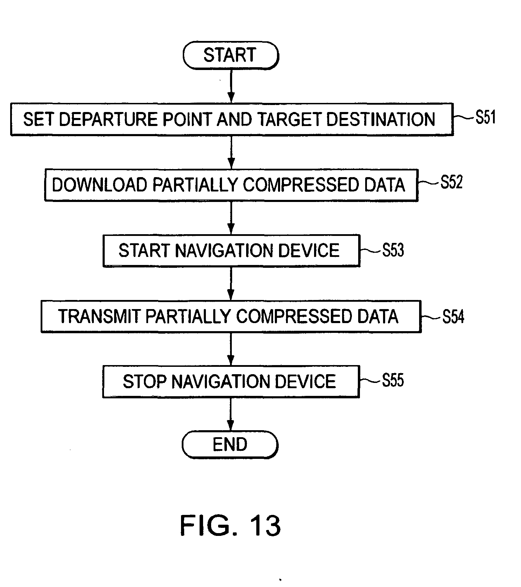

FIG. 13 is a main flow chart showing the operation of the personal computer according to the fourth embodiment which is an embodiment ofthe present invention.

First, if the operator inputs a departure point and a target destination by operating the operating section 73 of the personal computer 61 (FIG. 1) as a user terminal, the search condition set processing means of the CPU 71 executes search condition set processing, in which the departure point and target destination are set as search condition and then, the search condition is transmitted to the information center 62.

If the search condition is received by the server 63, the information obtainment processing means of the server 63 executes information obtainment processing to obtain information necessary for searching for a route by reading the search data with reference to search data file in the navigation database 64, reading statistical data with reference to the statistical data file, and reading traffic information transmitted from the VICS (registered trade mark) center.

Subsequently, the search processing means of the server 63 executes search processing to search for a route based on search data, traffic information, statistical data and the like according to the search condition.

If a route is searched for by the search processing means, the partial compression processing means in the compression processing means of the server 63 executes a partial compression processing, in which route guidance data, such as route data indicating a search route, map data indicating a map of a surrounding region of the search route, a voice output data for guiding along the search route using the voice output section 37 (FIG. 2) and the like, as the route guidance data indicating information for the route guidance, is compressed to create partially compressed data, and the partially compressed data is recorded in a recording unit in the server 63.

In this case, the partial compression processing means divides the route guidance data into surrounding data and non-surrounding data, and for the surrounding data in the route guidance data, creates partially compressed data using the route guidance data as it is, while for the non-surrounding data, creates the partially compressed data by compressing the route guidance data to create compressed data.

Subsequently, the partially compressed data transmission processing means in the compressed data transmission processing means of the server 63 executes partially compressed data transmission processing to transmit partially compressed data to the personal computer 61.

Then, if the partially compressed data is transmitted, the recording processing means of the CPU 71 executes recording processing to download the partially compressed data into the hard disk of the recording unit 74. Subsequently, the compressed data transmission processing means of the CPU 71 transfers the partially compressed data to the navigation unit 14 as described above.

Note that, since the operation of the navigation device 14 after the partially compressed data is transferred is the same as that of the third embodiment, description thereof is omitted.

Next, the flow chart will be described.
Step S51: sets a departure point and a target destination.
Step S52: downloads partially compressed data.
Step S53: starts up the navigation device 14.
Step S54: transmits partially compressed data.
Step S55: Stops the navigation device 14 and terminates the processing.

Although according to the second, fourth embodiments, compressed data and partially compressed data and the like transmitted from the information center 62 are downloaded into the hard disk of the personal computer 61 and the compressed data, partially compressed data and like are transferred to the navigation device 14, an example useful for understanding the present invention, denoted as the fifth embodiment, in which the compressed data transmitted from the information center 62 is received directly by the navigation device 14, will be described.

In this case, the navigation device 14 and the information center 62 are connected to each other via the network 43 constituted of portable phone network so as to enable bi-directional communication. For that purpose, the communication section 38 is constituted of a portable phone and communicates with the server 63 of the information center 62 via a base station (not shown).

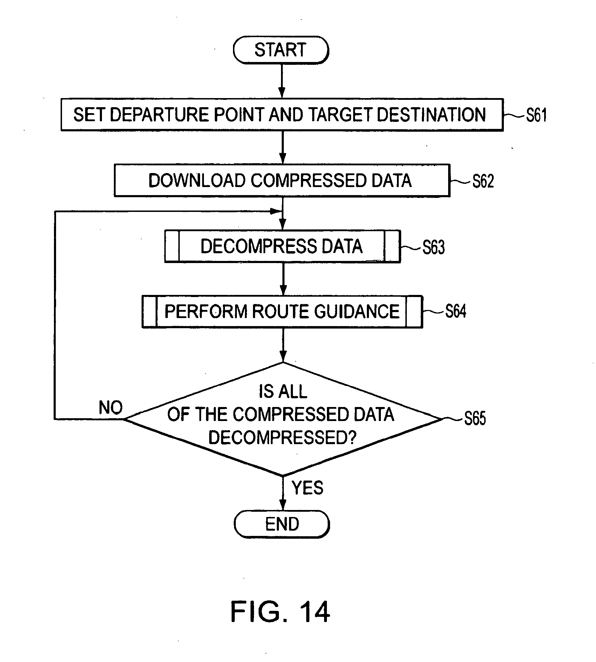

FIG. 14 is a main flow chart showing the operation of the navigation device according to the fifth embodiment which is an example useful for understanding the present invention.

If the ignition switch of a vehicle is turned on, the navigation device 14, which is an on-board device (FIG. 2), starts up so that a current position is detected by the GPS 21, which is a current position detecting section, and the azimuth of an the user vehicle is detected based on the turning angle of the vehicle detected by the gyro sensor 26.

If the operator inputs a departure point and a target destination by operating the input section 34 in the navigation device 14, search condition set processing means (not shown) of the CPU 31 executes search condition set processing, in which a departure point and a target destination are set up as search condition, and then transmits the search condition to the information center 62 which is an information provider.

Next, if the search condition is received by the server 63 (FIG. 1), the information obtainment processing means of the server 63 executes information obtainment processing to read out the search data with reference to the search data file in the navigation database 64, and then reads out statistical data with reference to the statistical data file, and reads traffic information transmitted from the VICS (registered trade mark) center to obtain information necessary for searching for a route.

Subsequently, the search processing means of the server 63 searches for a route based on search data, traffic information, statistical data and the like according to the search condition.

If a route is searched for by the search processing means, the compression processing means of the server 63 executes compression processing and compresses route data indicating a search route, map data indicating a map of a surrounding region of the search route, a voice output data for guiding along the search route by the voice output section 37 and the like as the route guidance data indicating information for route guidance so as to create compressed data and records the compressed data in the recording unit of the server 63.

In this case, the compression processing means divides the route guidance data into surrounding data and non-surrounding data and creates compressed data supplied with an administration header. The surrounding data in the route guidance data is provided with position information accompanied by compression.

Subsequently, the compressed data transmission processing means of the server 63 executes compressed data transmission processing to transmit compressed data to the navigation device 14.

If the compressed data is transmitted, the reception processing means (not shown) of the CPU 31 in the navigation device 14 executes reception processing to receive compressed data. Subsequently, the compressed data recording processing means of the CPU 31 executes compressed data recording processing, in which the compressed data is downloaded into the flash memory 30 and recorded.

Subsequently, the decompression processing means of the CPU 31 executes decompression processing to decompress compressed data. Thus, the decompression processing means reads a current position, reads out compressed data from the flash memory 30,and then reads position information with reference to the administration header of the compressed data. Subsequently, the decompression processing means determines whether or not the compressed data is surrounding data by comparing the current position with position information. If the compressed data is surrounding data, it decompresses the compressed data to create decompressed data and records the route guidance data, which is the decompressed data, into the hard disk of the data recording section 16. Note that the data may be recorded in another region of the flash memory 30 instead of the hard disk.

The route guidance processing means of the CPU 31 executes route guidance processing to read out the route guidance data from the hard disk of the data recording section 16 and forms a map screen on a display of the display section 35 based on the route guidance data. It displays a current position, a map of a surrounding region and the azimuth of an the user vehicle on the map screen, displays a search route in the surrounding region of the current position, and notifies a driver of the search route with voice through a message from the voice output section in order to execute route guidance.

Thus, the driver can drive a vehicle according to the current position, a map of a surrounding region, azimuth of the user vehicle and search route displayed on the map screen.

If decompression of the compressed data on the surrounding data is completed and the route guidance data is recorded in the hard disk, the decompression processing means reads out remaining compressed data from the flash memory 30 and decompresses the compressed data on the non-surrounding data to create decompressed data and then, records the route guidance data which is the decompressed data into the hard disk of the data recording section 16. Note that the data may be recorded in another region of the flash memory 30 instead of the hard disk.

Next, the flow chart will be described.
Step S61: sets up a departure point and a target destination.
Step S62: downloads the compressed data.
Step S63: executes decompression processing.
Step S64: executes route guidance processing.
Step S65: determines whether or not all compressed data is decompressed. If all compressed data is decompressed, the processing is ended and otherwise, the procedure is returned to step S63.

Next, an embodiment of the present invention, denoted as the sixth embodiment, in which partially compressed data transmitted from the information center 62 is received directly by the navigation device 14, will be described.

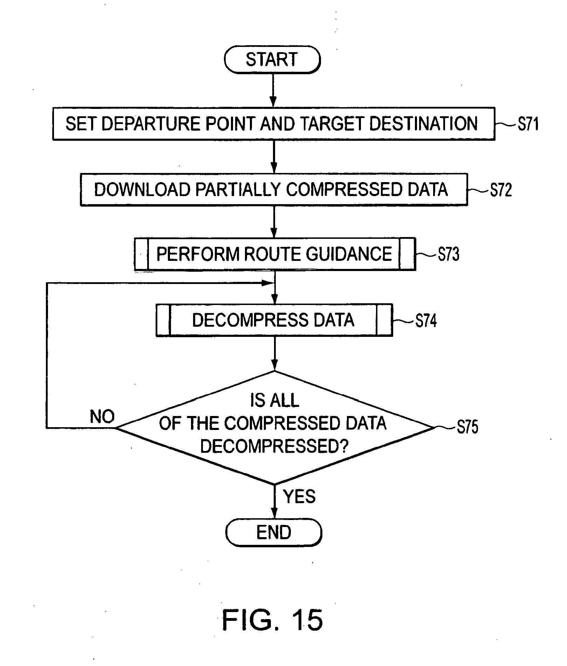

FIG. 15 is a main flow chart showing the operation of the navigation device according to the sixth embodiment which is an embodiment ofthe present invention.

If the ignition switch of a vehicle is turned on, the navigation device 14, which is an on-board device (FIG. 2), starts-up so that a current position is detected by the GPS 21, which is a current position detecting section, and the azimuth of an the user vehicle is detected based on the turning angle of the vehicle detected by the gyro sensor 26.

If the operator inputs a departure point and a target destination by operating the input section 34 in the navigation device 14, the search condition set processing means of the CPU 31 executes search condition set processing, in which a departure point and a target destination are set up and then, transmits the search condition to the information center 62 (FIG. 1).

Next, if the search condition is received by the server 63, the information obtainment processing means of the server 63 executes information obtainment processing to read out the search data with reference to the search data file in the navigation database 64 and then reads out statistical data with reference to the statistical data file and reads traffic information transmitted from the VICS (registered trade mark) center to obtain information necessary for searching for a route.

Subsequently, the search processing means of the server 63 searches for a route based on search data, traffic information, statistical data and the like according to the search condition.

If a route is searched for by the search processing means, the partial compression processing means in the compression processing means of the server 63 executes a partial compression processing and compresses the route guidance data, such as route data indicating a search route, map data indicating a map of a surrounding region of the search route, a voice output data for guiding along the search route through the voice output section 37 and the like, as the route guidance data indicating information for route guidance so as to create partially compressed data and records the partially compressed data in the recording unit of the server 63.

In this case, the partial compression processing means divides the route guidance data into surrounding data and non-surrounding data, and for the surrounding data in the route guidance data, creates partially compressed data using the route guidance data as it is, while for the non-surrounding data, creates the partially compressed data by compressing the route guidance data to create compressed data.

Subsequently, the partially compressed data transmission processing means in the compressed data transmission processing means of the server 63 executes partially compressed data transmission processing to transmit the partially compressed data to the navigation device 14.

Then, if the partially compressed data is transmitted, the partially compressed data recording processing means of the CPU 31 executes partially compressed data recording processing to download the partially compressed data into the flash memory 30.

Next, the route guidance processing means of the CPU 31 executes route guidance processing to read out partially compressed data from the hard disk of the data recording section 16 and forms a map screen on a display of the display section 35 based on surrounding data not compressed of the partially compressed data, and indicates a current position, a map of a surrounding region and the azimuth of an the user vehicle on the map screen and then notifies the driver of a search route with a message from the voice output section for guidance of the search route.

After the route guidance starts up, the decompression processing means of the CPU 31 executes decompression processing, and for the non-surrounding data, decompresses compressed data in the partially compressed data to create decompressed data and records the route guidance data, which is the decompressed data, into the hard disk of the data recording section 16.

Next, the flow chart will be described.
Step S71: sets up a departure point and a target destination.
Step S72: downloads partially compressed data.
Step S73: executes route guidance processing.
Step S74: executes decompression processing.
Step S75: determines whether or not all compressed data is decompressed. If all compressed data is decompressed, the processing is terminated and otherwise, the procedure is returned to step S74.

According to the first, second and fifth embodiments, the decompression processing means reads out the compressed data from the flash memory 30 after traveling of a vehicle is started and decompresses the compressed data of the non-surrounding data, however, with the traveling of the vehicle, the current position changes. Therefore, it is permissible to compare an updated current position with position information at a predetermined timing and for the non-surrounding data of a region near the updated current position, decompress the compressed data to create decompressed data constituted of the non-surrounding data and record the decompressed data in the hard disk of the data recording section 16. In this case, also for the non-surrounding data, its administration header is provided with position information accompanied by compression. Additionally, it is permissible to supply other data of the administration header with data which links the surrounding data with each other and decompress such linked surrounding data successively with updating of the current position.

The non-surrounding data can be further divided into plural small divided data and the surrounding data and each small divided data can be compressed at different compression rates. Then, an example useful for understanding the present invention, denoted as the seventh embodiment, in which the non-surrounding data is divided into route-surrounding data as a first small divided data and non-route-surrounding data (other data) as a second small divided data, will be described. Note that, since the processing until the route guidance data transmitted from the information center 62 to the personal computer 61 is recorded in the hard disk of the recording unit 74 is the same as that of the first embodiment, description thereof is omitted.

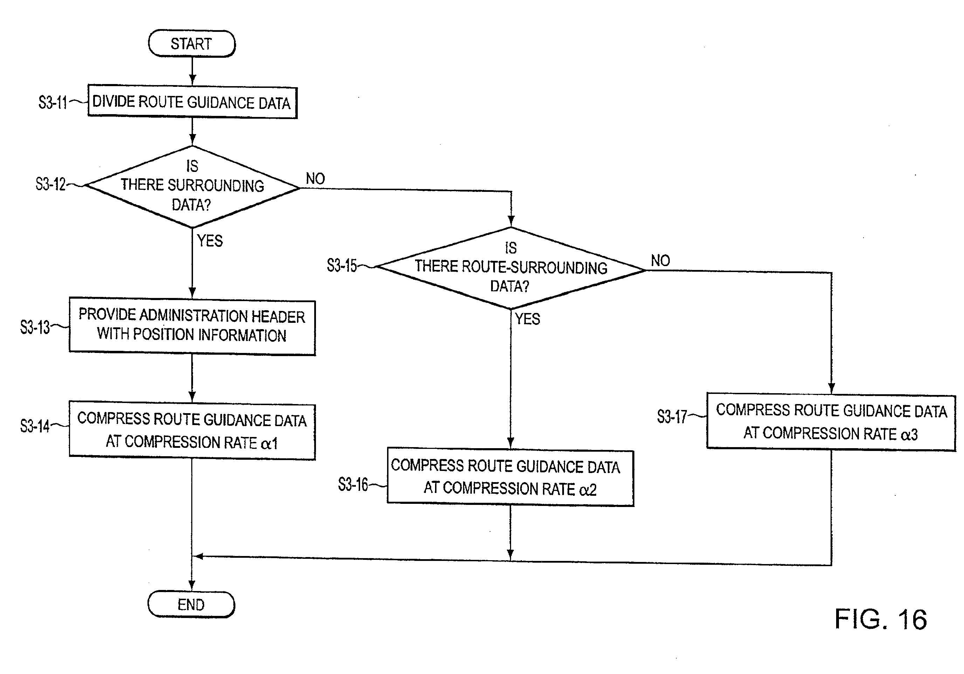

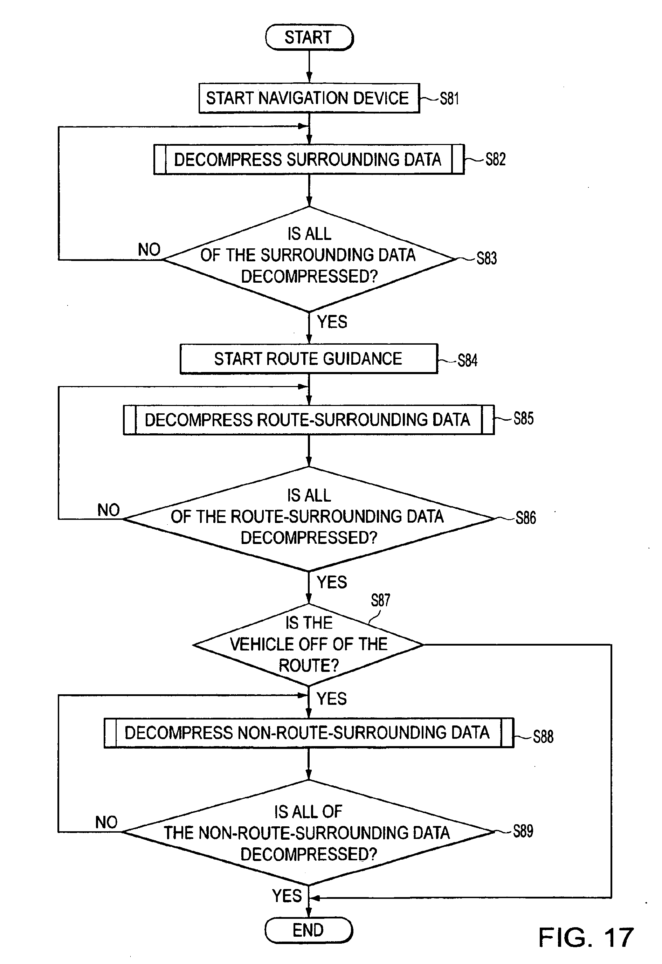

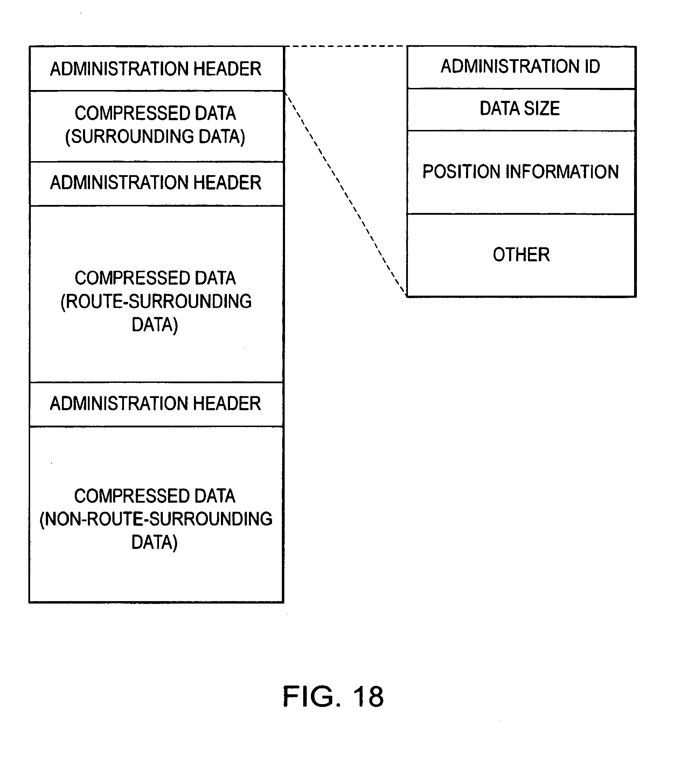

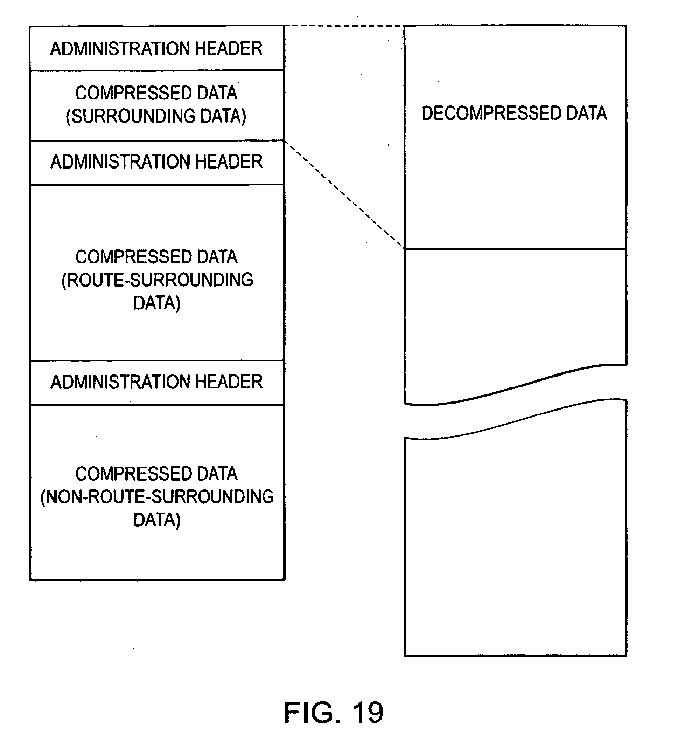

FIG. 16 is a diagram showing the sub-routine of compression processing according to the seventh embodiment which is an example useful for understanding the present invention. FIG.17 is a flow chart showing the operation of the navigation device according to the seventh embodiment. FIG. 18 is a diagram showing the data structure of compressed data according to the seventh embodiment. FIG. 19 is a diagram showing the data structure upon decompression processing of surrounding data according to the seventh embodiment.

In this case, the compression processing means of the CPU 71 in the personal computer 61 (FIG. 1) as a user terminal, executes compression processing to read out the route guidance data indicating information for route guidance from the hard disk and divide the route guidance data into surrounding data, route-surrounding data and other non-route-surrounding data.

The route-surrounding data is route guidance data on a region near the search route, for example, the route guidance data other than the surrounding data of the route guidance data within a mesh containing a search route, and the non-route-surrounding data is route guidance data within a mesh containing no search route. The route guidance data within one or more meshes adjacent a mesh containing the search route can be turned to the route-surrounding data as required.

Subsequently, the compression processing means compresses the route guidance data on the surrounding data, route-surrounding data and non-route-surrounding data to create compressed data supplied with an administration header and records each compressed data into the flash memory of the recording unit 74. In this case, respective compression rates α1 - a3 of the surrounding data, route-surrounding data and non-route-surrounding data are set up such that they are different from each other. Since the surrounding data needs to be decompressed immediately after the ignition switch in the navigation device 14 is turned on, the compression rate α1 is set low. Since the route-surrounding data is decompressed after the traveling of a vehicle is started, the compression rate α2 is set to a medium level. And since the non-route-surrounding data is decompressed after the traveling of a vehicle is started, for example, when a vehicle goes off a search route so that an off route (leaving the route) occurs, the compression rate α3 is set to a high level. Consequently, the compression rates α1 - a3 are set into the relation of α3<α2<α1.
In this case, the compression rates α1 - a3 are expressed in percentage to the data amount before a compression, and the higher the compression rate α1 - a3, the smaller the percentage value, while the lower the compression rate α1 - a3, the larger the percentage value.

The compression processing means compresses the route guidance data about the surrounding data at the compression rate α1, about the route-surrounding data at the compression rate α2, and about the non-route-surrounding data at the compression rate α3 to create compressed data supplied with an administration header and record the each compressed data into the flash memory of the recording unit 74. Note that the administration header is information for controlling compressed data and as shown in FIG. 18, includes an administration ID indicating data number of compressed data, data size indicating the size of the compressed data and other data. The data size of the surrounding data with respect to the data amount of compressed data thereof is large, the data size of the route-surrounding data with respect to the data amount of the compressed data thereof is medium, and the data size of the non-route-surrounding data with respect to the data amount of the compressed data thereof is small.

The compression processing means determines whether or not the divided route guidance data is surrounding data. Then, if the divided route guidance data is surrounding data, the administration header is supplied with position information or the like accompanied by compression. Although according to this embodiment, the position information is expressed with, for example, coordinate, it may be expressed with a road number, node number or the like.

If the compressed data is created in this way, the compressed data transmission processing means of the CPU 71 executes compressed data transmission processing to transfer the compressed data to the navigation device 14. Thus, if an operator instructs a start-up of the navigation device 14 by operating the operating section 73, the navigation device start-up processing means of the compressed data transmission processing means executes navigation device start-up processing to turn on the power of the navigation device 14 to start the navigation device 14. Subsequently, the data transmission processing means of the compressed data transmission processing means executes data transmission processing to read out compressed data from the flash memory of the recording device 74 and transfer to the navigation device 14. Accompanied by this, the compressed data recording processing means of the CPU 31 (FIG. 2) in the navigation device 14 executes compressed data recording processing to record compressed data into the flash memory 30.

If all the compressed data is recorded in the flash memory 30, the navigation device stop processing means in the compressed data transmission processing means executes navigation device stop processing to stop the navigation device 14 and transfer the compressed data into a waiting condition in which it is available.

Because when the route guidance data is transmitted from the personal computer 61 to the navigation device 14, the route guidance data is compressed to create compressed data, the data size of the compressed data can be reduced. According to this embodiment, the compression rate α2 of the route-surrounding data is higher than the compression rate α1 of the surrounding data, and the compression rate α3 of the non-route-surrounding data is higher than the compression rate α2 of the route-surrounding data. Thus, the data size of the entire compressed data can be reduced sufficiently, so that according to this embodiment, it can be reduced to about 1/3.

Because the communication required time becomes sufficiently short, a time in which the navigation device 14 is kept powered on can be reduced sufficiently, so that power consumed by the navigation device 14 is decreased further. Consequently, load applied to a battery mounted on a vehicle can be decreased further.

Further, because the communication required time is short, operator's work can be simplified thereby reducing communication cost.

The speed for decompressing the surrounding data, that is, decompressing speed is higher than the decompressing speed of the route-surrounding data by the same degree that the compression rate α1 is lower than the compression rate α2, and the decompressing speed of the route-surrounding data is higher than the decompression speed of the non-route-surrounding speed by the same degree that the compression rate α2 is lower than the compression rate α3.

Next, the operation of the navigation device 14 when a vehicle is driven will be described.

First, if the ignition switch of a vehicle is turned on, the navigation device 14 starts up, so that a current position is detected by the GPS 21 as a current position detecting section and the azimuth of an the user vehicle is detected based on a turning angle of the vehicle detected by the gyro sensor 26.

Next, surrounding data decompression processing means (not shown), which is first decompression processing means of the CPU 31, executes surrounding data decompression processing, which is a first decompression processing, to decompress the compressed data on the surrounding data giving priority based on a current position and position information. For that purpose, the surrounding data decompression processing means reads a current position, reads out compressed data from the flash memory 30, and reads position information with reference to the administration header for the compressed data. The surrounding data decompression processing means determines whether or not the compressed data is surrounding data by comparing a current position with position information. If the compressed data is surrounding data, the compressed data on the surrounding data is decompressed as shown in FIG. 19 and the route guidance data, which is the decompressed data, is recorded in the hard disk of the data recording section 16. Note that the data may be recorded in another region of the flash memory 30 instead of the hard disk.

If the surrounding data decompression processing means fails in surrounding data decompression processing, the surrounding data decompression processing can be executed by reading out compressed data from the flash memory 30 again.

Then, the route guidance processing means of the CPU 31 executes route guidance processing to determine whether or not all surrounding data is decompressed, and if all surrounding data is decompressed, the route guidance is started. For that purpose, the route guidance processing means reads out route guidance data from the hard disk of the data recording section 16, forms a map screen on a display of the display section 35 based on the route guidance data, displays a current position, a map of a surrounding region and the azimuth of an the user vehicle on the map screen, displays a search route in the surrounding region of the current position, and notifies a driver of the search route with a message from the voice output section 37 for guidance of the route.

Subsequently, the route-surrounding data decompression processing means (not shown), which is second decompression processing means of the CPU 31, executes route-surrounding data decompression processing, which is a second decompression processing, in which the compressed data on route surrounding is decompressed to create decompressed data and the route guidance data which is the decompressed data is recorded in the hard disk of the data recording section 16.

If the route-surrounding data decompression processing means fails in route-surrounding data decompression processing, the route-surrounding data decompression processing may be executed by reading out the compressed data from the flash memory 30.

The route guidance processing means determines whether or not all route-surrounding data is decompressed, and if all route-surrounding data is decompressed, the route guidance data is read out from the hard disk of the data recording section 16 accompanied by the traveling of a vehicle along the search route, and the map screen is formed on a display of the display section 35 based on the route guidance data. It displays a current position, a map of a surrounding region and the azimuth of an the user vehicle on the map screen, displays a search route in the surrounding region of the current position, and notifies a driver of the search route with voice through a message from the voice output section 37 in order to execute route guidance.

When a vehicle is driven along a search route, a driver may drive the vehicle along a mistaken route different from the search route intentionally or by mistake. Thus, off route determination processing means (not shown) of the CPU 31 executes off route determination processing, in which it reads a current position and determines whether or not an off route occurs based on the current position and route data. If the off route occurs, non-route-surrounding data decompression processing means (not shown), which is third decompression processing means of the CPU 31, executes the non-route-surrounding data decompression processing, which is a third decompression processing, to decompress the compressed data on the non-route-surrounding data to create decompressed data, and then records the route guidance data, which is the decompressed data, into the hard disk of the data recording section 16.

In this case, the non-route-surrounding data decompression processing is carried out about the non-route-surrounding data within a mesh in a predetermined range form a search route in the non-route-surrounding data. According to this embodiment, the mesh with the predetermined range is a mesh with a range at a predetermined distance from the search route and this may be a mesh containing the route guidance data which can be decompressed within a predetermined time.

The re-search processing means (not shown) in the CPU 31 executes re-search processing to determine whether or not all non-route-surrounding data is decompressed. If all non-route-surrounding data is decompressed, the current position and non-route-surrounding data are read in and a route from a current position to the search route is re-searched for according to the non-route-surrounding data.

Next, the flow chart of FIG. 16 will be described.
Step S3-11: divides route guidance data.
Step S3-12: determines whether or not it is surrounding data. If it is surrounding data, procedure proceeds to step S3-13 and if it is not surrounding data, the procedure proceeds to step S3-15.
Step S3-13: supplies the administration header with position information.
Step S3-14: compresses route guidance data at a compression rate α1 and return is executed.
Step S3-15: determines whether or not it is route-surrounding data. If it is route-surrounding data, the procedure proceeds to step S3-16 and if it is not route-surrounding data, the procedure proceeds to step S3-17.
Step S3-16: compresses the route guidance data at a compression rate α2 and return is executed.
Step S3-17: compresses the route guidance data at a compression rate α3 and return is executed.

Next, the flow chart of FIG. 17 will be described.
Step S81: starts up the navigation device.
Step S82: executes surrounding data decompression processing.
Step S83: determines whether or not all surrounding data is decompressed. If all surrounding data is decompressed, the procedure proceeds to step S84 and otherwise, the procedure returns to step S82.
Step S84: starts route guidance processing.
Step S85: executes route-surrounding data decompression processing.
Step S86: determines whether or not all route-surrounding data is decompressed. If all route-surrounding data is decompressed, the procedure proceeds to step S87 and otherwise, returns to step S85.
Step S87: determines whether or not an off route occurs. If the off route occurs, the procedure proceeds to step S88, and if no off route occurs, the processing is ended. Step S88: executes non-route-surrounding data decompression processing.
Step S89: determines whether or not all non-route-surrounding data is decompressed. If all non-route-surrounding data is decompressed, the processing is ended and otherwise, the procedure returns to step S88.

Although according to this embodiment, the compression processing is executed by the personal computer 61, according to another embodiment, the compression processing can be carried out in the information center 62. In this case, in the compression processing of the information center 62, the route guidance data is divided into surrounding data and non-surrounding data, and the non-surrounding data is further divided into route-surrounding data and other non-route-surrounding data and then, the surrounding data, route-surrounding data and non-route-surrounding data are compressed at the compression rates α1 - a3.

According to the seventh embodiment, the route guidance data is divided into surrounding data, route-surrounding data and non-route-surrounding data, and the surrounding data is compressed with the administration head supplied with position information, while the route-surrounding data and non-route-surrounding data are compressed as they are. Here, an embodiment of the present invention, denoted as the eighth embodiment, in which compression of the surrounding data is omitted, will be described. Also in this case, if the data amount of the surrounding data is large and a predetermined compression condition is established, the surrounding data is compressed, and if the data amount is small and the compression condition is not established, the surrounding data is not compressed. For example, if it is assumed that a communication required time when the surrounding data is transferred from the personal computer 61 to the navigation device 14 without being compressed is τ1, the communication required time for the compressed data of the surrounding data is τ2 and a decompression time is τ3, when the communication required time τ1, τ2 and the decompression time τ3 are in the relation of τ1 > τ2 + τ3, a compression condition is established, and if there is a relation of τ1 ≤ τ2 + τ3, no compression condition is established. Because the processing until the route guidance data transmitted from the information center 62 to the personal computer 61 is recorded in the hard disk of the recording device 74 is the same as that of the third embodiment, description thereof is omitted.

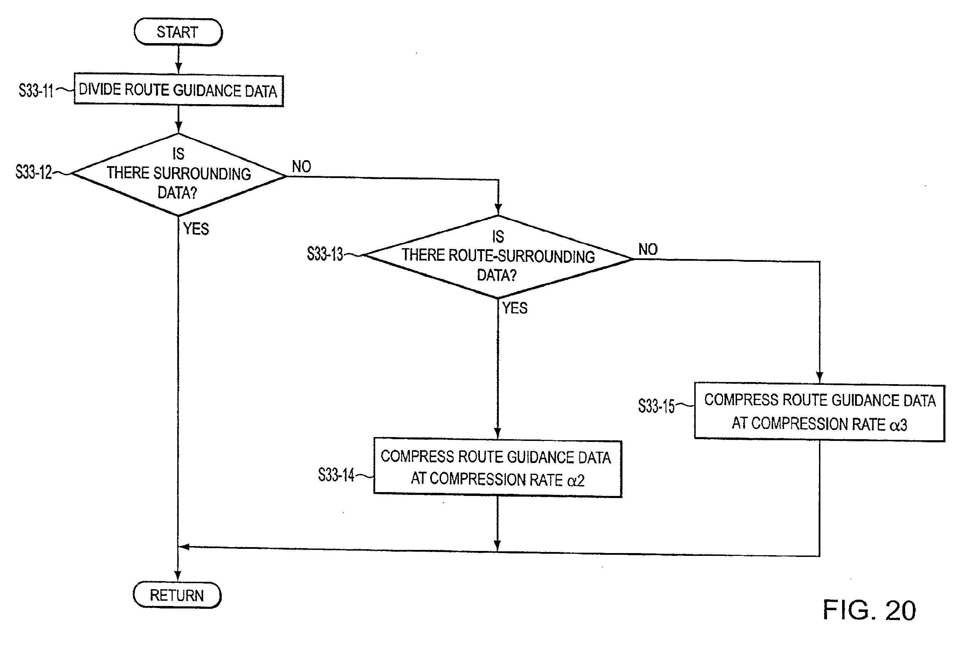

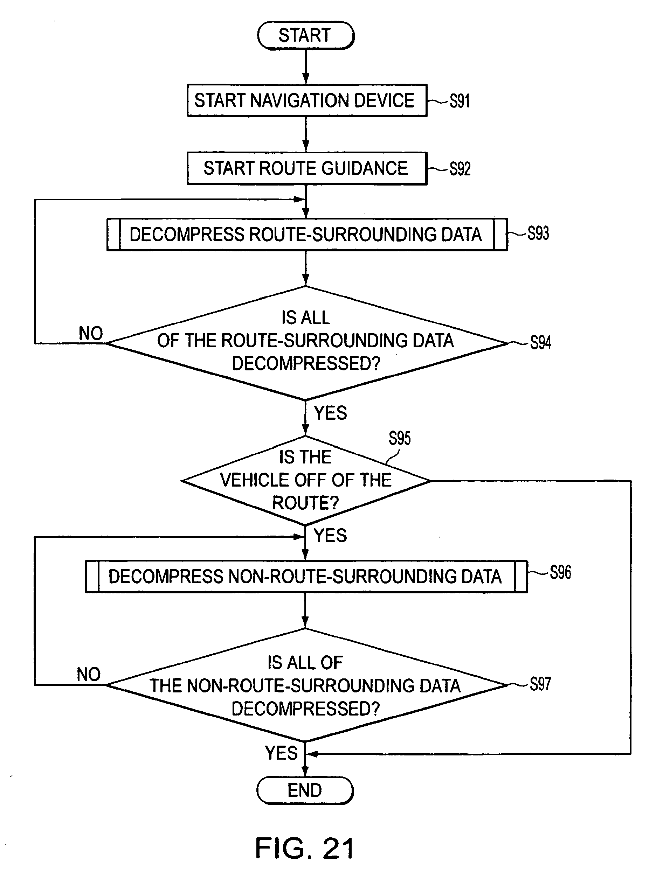

FIG. 20 is a diagram showing the sub-routine of partial compression processing according to the eighth embodiment which is an embodiment of the present invention. FIG. 21 is a flow chart showing the operation of the navigation device according to the eighth embodiment.

In this case, in the personal computer 61 (FIG.1) as a user terminal, the partial compression processing means in the compression processing means of the CPU 71 executes partial compression processing to read out route guidance data indicating information for route guidance from the hard disk and divide the route guidance data into surrounding data and non-surrounding data. The non-surrounding data is further divided into route-surrounding data and other non-route-surrounding data. Subsequently, the partial compression processing means adopts the route guidance data as it is for the surrounding data, while for the route-surrounding data, compresses the route guidance data at the compression rate α2, and for the non-route-surrounding data, compresses the route guidance data at the compression rate α3 to create compressed data supplied with an administration header thereby creating partially compressed data.

If the partially compressed data is created in this way, the compressed data transmission processing means in the CPU 71 transfers the partially compressed data to the navigation device 14 as an on-board device. Thus, if an operator instructs a start-up of the navigation device 14 by operating the operating section 73, the navigation device start-up processing means of compressed data transmission processing means executes navigation device start-up processing, in which the navigation device 14 starts up by turning on the power of the navigation device 14. Subsequently, the data transfer processing means of the compressed data transmission processing means, executes data transfer processing to read out partially compressed data from the hard disk of the recording device 74 and transmit it to the navigation device 14. Along with this, in the navigation device 14, the partially compressed data recording processing means of the CPU 31 (FIG. 2) executes partially compressed data recording processing to record the partially compressed data into the flash memory 30.

If all the partially compressed data is recorded in the flash memory 30, the navigation device stop processing means of the compressed data transmission processing means executes navigation device stop processing to stop the navigation device 14 and bring the partially compressed data into a waiting condition in which it is available.

Although according to this embodiment, the route guidance data is compressed at the compression rate α2 for the route-surrounding data while for the non-route-surrounding data, is compressed at the compression rate α3, the route guidance data may be compressed at a compression rate α1 which is lower than the compression rate α2 for the route-surrounding data while for the non-route-surrounding data, may be compressed at the compression rate α2 which is lower than the compression rate α3.

Next, the operation of the navigation device 14 when a vehicle is driven will be described.

First, if the ignition switch of a vehicle is turned on, the navigation device 14 starts up, so that a current position is detected by the GPS 21 as a current position detecting section and the azimuth of an the user vehicle is detected based on a turning angle of the vehicle detected by the gyro sensor 26.

The route guidance processing means of the CPU 31 executes route guidance processing so as to read out partially compressed data from the flash memory 30, and forms a map screen on a display of the display section 35 based on the non compressed route guidance data of the partially compressed data on the surrounding data. It displays a current position, a map of a surrounding region and the azimuth of an the user vehicle on the map screen, displays a search route in the surrounding region of the current position, and notifies a driver of the search route with voice through a message from the voice output section in order to execute route guidance.

If the route guidance starts up in this way, the route-surrounding data decompression processing means which is second decompression processing means of the CPU 31 executes route-surrounding data decompression processing, which is a second decompression processing, in which it decompresses the compressed data of the partially compressed data on the route-surrounding data to create decompressed data and then, records the route guidance data, which is the decompressed data, into the hard disk of the data recording section 16. Then, the route guidance processing means determines whether or not all route-surrounding data is decompressed.

Subsequently, if all route-surrounding data is decompressed, the off route determination processing means in the CPU 31 executes off route determination processing to read a current position and determines whether or not an off route occurs based on the current position and route data. If the off route occurs, the non-route-surrounding data decompression processing means, which is third decompression processing means of the CPU 31, executes non-route-surrounding data decompression processing, which is a third decompression processing, in which it decompresses partially compressed data on the non-route-surrounding data to create decompressed data and records the route guidance data, which is the decompressed data, into the hard disk of the data recording section 16.

In this case, the non-route-surrounding data decompression processing is executed about the non-route-surrounding data within a mesh in a predetermined range from a search route. Although according to this embodiment, the mesh in the predetermined range is a mesh within a range at a predetermined distance from the search route, the mesh can be replaced with a mesh containing a route guidance data which can be decompressed in a predetermined time.

The re-search processing means of the CPU 31 executes re-search processing, in which it determines whether or not all the non-route-surrounding data is decompressed, and if all the non-route-surrounding data is decompressed, a current position and non-route-surrounding data are read and then, a route from the current position up to a search route is re-searched according to the non-route-surrounding data.

Because as for the surrounding data, the route guidance data is read immediately without decompression processing after the ignition switch is turned on to start the navigation device 14, a vehicle can be driven immediately using the route guidance data.

Next, the flow chart of FIG. 20 will be described.
Step S33-11: divides route guidance data.
Step S33-12: determines whether or not it is surrounding data. If it is surrounding data, return is executed and otherwise, the procedure proceeds to step S33-13.
Step S33-13: determines whether or not it is route-surrounding data. If it is route-surrounding data, the procedure proceeds to step S33-14, and if it is not route- surrounding data, the procedure proceeds to step S33-15.
Step S33-14: compresses route guidance data at the compression rate α2 and return is executed.
Step S33-15: compresses route guidance data at the compression rate α3 and return is executed.

Next, the flow chart of FIG. 21 will be described.
Step S91: starts up the navigation device.
Step S92: starts the route guidance processing.
Step S93: executes route-surrounding data decompression processing.
Step S94: determines whether or not all route-surrounding data is decompressed. If all route-surrounding data is decompressed, the procedure proceeds to step S95, and if not, the procedure returns to step S93.
Step S95: determines whether or not an off route occurs. If the off route occurs, the procedure proceeds to step S96 and if no off route occurs, the processing is terminated. Step S96: executes non-route-surrounding data decompression processing.
Step S97: determines whether or not all non-route-surrounding data is decompressed. If all non-route-surrounding data is decompressed, the processing is terminated, and if not, the procedure is returned to step S96.

Although according to this embodiment, the compression processing is carried out by the personal computer 61, according to another embodiment, the compression processing may be executed by the information center 62. In this case, in the compression processing in the information center 62, the route guidance data is divided into surrounding data and non-surrounding data, and the non-surrounding data is further divided into route-surrounding data and other non-route-surrounding data. The surrounding data is not compressed while the route-surrounding data and non-route-surrounding data are compressed at the compression rates α2, α3 respectively.

Although according to the seventh and eighth embodiments, after the compressed data, partially compressed data and the like transmitted from the information center 62 are downloaded into the hard disk of the personal computer 61, those compressed data, partially compressed data and the like are transferred to the navigation device 14, according to another embodiment, the compressed data transmitted from the information center 62 may be received directly by the navigation device 14.

Although according to the above-described respective embodiments, the compressed data, partially compressed data and the like downloaded into the hard disk of the recording unit 74 are transmitted to the navigation device 14 and recorded in the flash memory 30, according to this embodiment, the compressed data, partially compressed data and the like downloaded into the hard disk of the recording unit 74 are recorded into a memory card temporarily and the memory card is set into the data recording section 16 of the navigation device 14 and at the same time, recorded into the hard disk or the like of the data recording section 16.

Although according to the above respective embodiments, the route guidance data is transmitted to the personal computer 61, the navigation device 14 and the like as navigation information, if the route search is not executed, only the map data can be transmitted to the personal computer 61, the navigation device 14 and the like as the navigation information. In this case, the map data is compressed.

Although according to the above respective embodiments, the compressed data transmitted from the personal computer 61 or from the server 63 is recorded in the flash memory 30 and after that, decompressed and recorded in the hard disk of the data recording section 16 as decompressed data, the compressed data transmitted from the personal computer 61 or from the server 63 may be recorded in the hard disk and the decompressed data may be recorded in the flash memory 30. Because as described above, the data recording section 16 allows various kinds of external memory devices such as the memory card to be set as well as the hard disk, the compressed data transmitted from the personal computer 61 or from the server 63 may be recorded in an external memory device and the decompressed data may be recorded in the flash memory 30.

As described above, the information center 62 is capable of transmitting not only route guidance data but also traffic information, general information, image information, music information and the like to the personal computer 61. Thus, an operator can transfer information downloaded into the hard disk by operating the operating section 73 to the navigation device 14 when a vehicle stays in a garage and record it in, for example, the flash memory 30 in the navigation processing section 17.

In this case, if communication required time for transferring the information to the navigation device 14 is long, the navigation device 14 needs to be kept powered on in this while. Thus, as described above, electric power consumed by the navigation device 14 increases and consequently load applied to the battery mounted on a vehicle increases tremendously.

Then, an example useful for understanding the present invention, denoted as the ninth embodiment, in which information transmitted from the information center 62 is compressed to create compressed data and the compressed data is transferred to the navigation device 14, will be described. For this embodiment, a case that general information out of variety of information is compressed will be described.

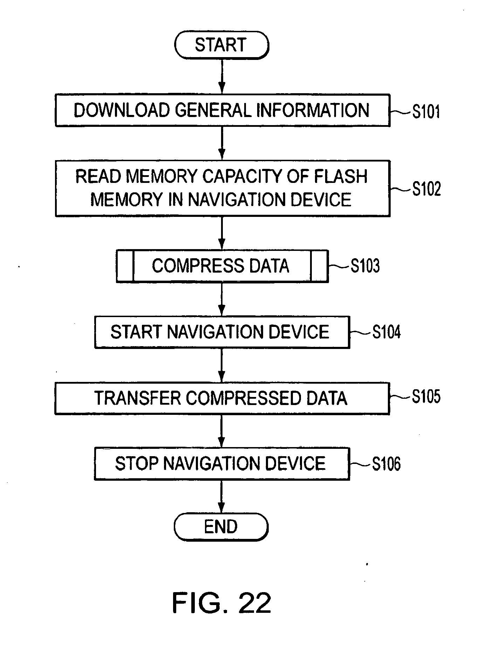

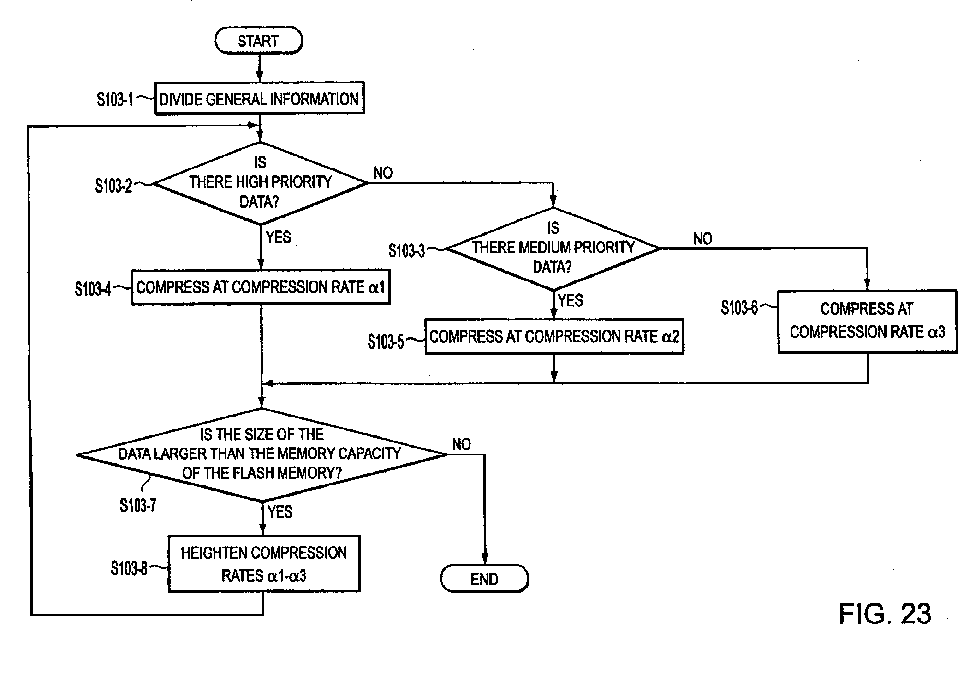

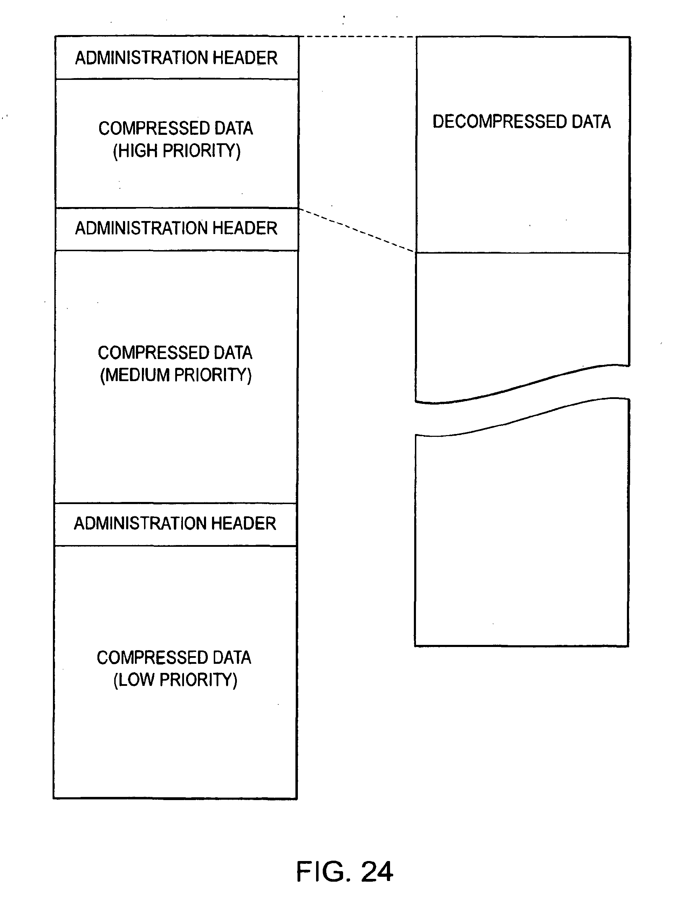

FIG. 22 is a main flow chart showing the operation of a personal computer according to the ninth embodiment which is an example useful for understanding the present invention. FIG. 23 is a diagram showing the sub-routine of the compression processing according to the ninth embodiment. FIG. 24 is a diagram showing the data structure upon decompression processing according to the ninth embodiment.

First, if an operator transmits an information request to the information center 62, which is an information provider, by operating the operating section 73 of the personal computer 61 (FIG. 1), which is a user terminal, the information obtainment processing means in the server 63 in the information center 62 executes information obtainment processing to read general information from a database disposed separately from the navigation database 64 and obtain it.

Subsequently, the information transmission processing means in the server 63 executes information transmission processing to transmit general information obtained by the information obtainment processing means to the personal computer 61.

Then, in the personal computer 61, the reception processing means in the CPU 71 executes reception processing to receive the general information and subsequently, the recording processing means in the CPU 71 executes recording processing to download the general information into the hard disk of the recording unit 74.

After the navigation device 14 starts up, the each general information is classified depending on whether or not the driver needs it, that is, priority order indicating whether or not it should be provided to the driver giving priority. Therefore, when each general information is recorded in the hard disk, the priority order is recorded together.

Next, the CPU 71 reads the memory capacity of the flash memory 30 (FIG. 2) in the navigation device 14, and the compression processing means in the CPU 71 executes compression processing to compress the downloaded general information based on the memory capacity so as to be recorded in the flash memory 30.

Thus, the compression processing means reads out each general information from the hard disk and divides the each general information to plural small divided data according to the priority order. That is, the compression processing means divides to high priority data which is a first small divided data having a high priority order and desired to be decompressed with the highest priority, a medium priority data which is a second small divided data having a medium priority and desired to be decompressed with a priority subsequent to the high priority data, and a low priority data which is a third small divided data having a low priority order and desired to be decompressed with the lowest priority. Note that the high priority data constitutes at least a piece of information which needs to be obtained giving priority in the navigation device 14.

Subsequently, the compression processing means compresses the high priority data, medium priority data and low priority data at the compression rates α1 - a3 to create compressed data supplied with an administration header and records each compressed data into the flash memory of the recording unit 74. In this case, the respective compression rates α1 - a3 of the high priority data, medium priority data and low priority data are set to be different from each other. The compression rate α1 of the high priority data is set low because it needs to be decompressed in the navigation device 14 immediately after the ignition switch is turned on. The compression rate α2 of the medium priority data is set to a medium level because it only needs to be decompressed after a vehicle is started, and the compression rate α3 of the low priority data is set high because it only needs to be decompressed after the decompression of the medium priority data is terminated after the vehicle is started. The compression rates α1 - a3 are in the order of α3<α2<α1.

The administration header is information for controlling the compressed data and constituted of an administration ID indicating data No. of the compressed data, data size indicating the size of the compressed data and other data. The data size of the compressed data of the high priority data with respect to data amount is large, the data size of the compressed data of the medium priority data with respect to data amount is medium, and the data size of the compressed data of the low priority data with respect to data amount is small.

The data size determination processing means in the compression processing means executes data size determination processing to compute a total of data size of the high priority data, medium priority data and low priority data, that is, total data size in order to determine whether or not the all data size is larger than the memory capacity of the flash memory 30. If the all data size is larger than the memory capacity of the flash memory 30, the data size determination processing means changes the compression rates α1 - a3 to higher values.

Although according to this embodiment, for the high priority data, the predetermined compression rate α1 is set up, according to another embodiment, the high priority data is not compressed.

Although according to this embodiment, when the entire data size is larger than the memory capacity of the flash memory 30, the data size determination processing means changes the compression rates α1 - a3 to a higher value, only the compression rate α3 can be heightened if the entire data size is larger than the memory capacity of the flash memory 30.

If the compressed data is created in this way, the compressed data transmission processing means in the CPU 71 executes compressed data transmission processing to transfer the compressed data to the navigation device 14. Thus, if an operator instructs a start-up of the navigation device 14 by operating the operating section 73, the navigation device start-up processing means of the compressed data transmission processing means executes navigation device start-up processing to turn on the power of the navigation device 14 to start the navigation device 14. Subsequently, the data transferring processing means of the compressed data transmission processing means executes data transferring processing to read out compressed data from the flash memory of the recording unit 74 and transfer it to the navigation device 14. In accordance with this, in the navigation device 14, the compressed data recording processing means of the CPU 31 executes compressed data recording processing to record compressed data into the flash memory 30.

If all the compressed data is recorded in the flash memory 30, the navigation device stop processing means of the compressed data transmission processing means executes navigation device stop processing to stop the navigation device 14 and bring the compressed data into a waiting condition in which it is available.

Because when general information is transmitted from the personal computer 61 to the navigation device 14, the general information is compressed according to the priority order and then compressed data is created, the data size of the compressed data can be reduced.

Therefore, communication required time is shortened sufficiently and a time in which the navigation device 14 is kept powered on can be reduced. Thus, power consumed by the navigation device 14 is decreased, and consequently, load applied to a battery mounted on a vehicle can be reduced.

Further, because the communication required time is short, operator's work can be simplified thereby reducing communication cost.

Next, the operation of the navigation device 14 when a vehicle is driven will be described.

First, if the ignition switch of a vehicle is turned on, the navigation device 14 starts up so that a current position is detected by the GPS 21 and the azimuth of an the user vehicle is detected by a turning angle of the vehicle detected by the gyro sensor 26.

Next, if the high priority data decompression processing means (not shown), which is first decompression processing means of the CPU 31, executes high priority data decompression processing, which is a first decompression processing, to decompress compressed data giving priority about the high priority data. If the decompression of the high priority data is ended, and as shown in FIG. 24, decompressed data is created so that the vehicle starts running, the medium priority data decompression processing means (not shown), which is second decompression processing means of the CPU 31, executes medium priority data decompression processing, which is a second decompression processing. If the decompression of the medium priority data is ended, the low priority data decompression processing means (not shown), which is third decompression processing means of the CPU 31, executes low priority data decompression processing, which is a third decompression processing, to decompress the compressed data on the low priority data.

If the compressed data is decompressed in this way, the first to third decompression processing means records decompressed data into the flash memory 30.

Note that, the speed of decompressing the high priority data, that is, decompressing speed is higher than that of the medium priority data by the same degree that the compression rate α1 is lower than the compression rate α2. The decompressing speed of the medium priority data is higher than that of the low priority data by the same degree that the compression rate α2 is lower than the compression rate α3.

The flow chart of FIG. 22 will be described next.
Step S101: downloads general information.
Step S102: reads the memory capacity of the flash memory 30 in the navigation device 14.
Step S103: executes compression processing.
Step S104: starts up the navigation device 14.
Step S105: transfers compressed data.
Step S106: stops the navigation device 14 and terminates the processing.

Next, the flow chart of FIG. 23 will be described.
Step S103-1: divides general information.
Step S 103-2: determines whether or not it is high priority data. If it is high priority data, the procedure proceeds to step S103-4, and if not, the procedure proceeds to step S103-3.
Step S103-3: determines whether or not it is medium priority data. If it is medium priority data, the procedure proceeds to step S103-5, and if not, the procedure proceeds to step S103-6.
Step S103-4: compresses at the compression rate α1.
Step S103-5: compresses at the compression rate α2.
Step S103-6: compresses at the compression rate α3.
Step S103-7: determines whether or not the entire data size is larger than the memory capacity of the flash memory 30. If the entire data size is larger than the memory capacity of the flash memory 30, the procedure proceeds to step S103-8 and if the entire data size is smaller than the memory capacity of the flash memory 30, return is executed. Step S103-8: heightens the compression rates α1 - a3 and the procedure returns to step S103-2.

Although according to the above-described respective embodiments, the personal computer 61 is used as a user terminal and information obtainment processing, compression processing, compressed data transmission processing and the like are executed by the personal computer 61, it is permissible to use a home server provided in a driver's home as a user terminal and execute the information obtainment processing, compression processing, compressed data transmission processing and the like at the home server.

In this case, the home server refers to the one which obtains information from outside, accumulates the obtained information and controls and edits the accumulated information corresponding to user's request and further is capable of transmitting information to an external device, for example, a personal computer, portable phone, PAD, navigation device and the like.

Note that the present invention is not restricted to the above-described respective embodiments and may be modified in various kinds of forms based on the gist of the present invention, and those modifications are not excluded from the scope of the present invention, as defined by the claims.

### INDUSTRIAL APPLICABILITY

The present invention is applicable for a navigation system for driving a vehicle based on navigation information.

## Claims

1. A navigation system comprising a user terminal (61), an information provider (62) and a navigation device (14), **characterized by** comprising:
compression processing means which is adapted to compress, from surrounding data on a region near a vehicle travel starting point and other non-surrounding data in navigation information, the non-surrounding data to create compressed non-surrounding data; and
transmission processing means which is adapted to transmit said compressed non-surrounding data and said uncompressed surrounding data to the navigation device, wherein
said compression processing means and said transmission processing means are disposed at the user terminal, and said compression processing means is adapted to compress said non-surrounding data in said navigation information, which is transmitted from the information provider to the user terminal, or
said compression processing means is disposed at the information provider and said transmission processing means is disposed at the user terminal, and said transmission processing means is adapted to transmit said compressed non-surrounding data and said uncompressed surrounding data, which are transmitted from the information provider to the user terminal, or
said compression processing means and said transmission processing means are disposed in a server of the information provider.

2. The navigation system according to claim 1, further comprising:
reception processing means which is adapted to receive said compressed non-surrounding data and said uncompressed surrounding data, wherein
said reception processing means is disposed at the navigation device.

3. The navigation system according to claim 1 or 2, wherein
said non-surrounding data is divided to plural small divided data, and
said plural small divided data are route-surrounding data of a region near a search route and other non-route-surrounding data.

4. The navigation system according to claim 3, wherein said compression processing means is adapted to compress the route-surrounding data and the non-route-surrounding data at different compression rates.

5. The navigation system according to claim 4, wherein the compression rate of the non-route-surrounding data is higher than the compression rate of the route-surrounding data.

6. The navigation system according to claim 1 or 2, wherein said navigation information is map data or route guidance data containing route data indicating at least a search route.

7. An information recording method program for a navigation system comprising a user terminal (61), an information provider (62) and a navigation device (14), **characterized in that** at least one computer is made to function as
compression processing means for compressing, from surrounding data of a region near a vehicle travel starting point and other non-surrounding data in navigation information, the non-surrounding data to create compressed non-surrounding data, and
transmission processing means for transmitting said compressed non-surrounding data and said uncompressed surrounding data to the navigation device,
wherein the at least one computer is made to function such that said compression processing means and said transmission processing means are disposed at the user terminal, and said compression processing means is adapted to compress said non-surrounding data in said navigation information, which is transmitted from the information provider to the user terminal, or
said compression processing means is disposed at the information provider and said transmission processing means is disposed at the user terminal, and said transmission processing means is adapted to transmit said compressed non-surrounding data and said uncompressed surrounding data, which are transmitted from the information provider to the user terminal, or
said compression processing means and said transmission processing means are disposed in a server of the information provider.

## Patentansprüche

1. Navigationssystem mit einem Benutzerendgerät (61), einem Informationsanbieter (62) und einer Navigationsvorrichtung (14), **gekennzeichnet durch**:
eine Komprimierungsverarbeitungseinrichtung, die angepasst ist, aus Umgebungsdaten über ein Gebiet nahe einem Fahrzeugfahrtstartpunkt und anderen Nichtumgebungsdaten in Navigationsinformationen, die Nichtumgebungsdaten zu komprimieren, um komprimierte Nichtum-gebungsdaten zu erzeugen; und
eine Übertragungsverarbeitungseinrichtung, die angepasst ist, die komprimierten Nichtumgebungsdaten und die unkomprimierten Umgebungsdaten an die Navigationsvorrichtung zu übertragen, wobei
die Komprimierungsverarbeitungseinrichtung und die Übertragungsverarbeitungseinrichtung an dem Benutzerendgerät eingerichtet sind, und die Komprimierungsverarbeitungseinrichtung angepasst ist, die Nichtumgebungsdaten in den Navigationsinformationen zu komprimieren, die von dem Informationsanbieter an das Benutzerendgerät übertragen werden, oder
die Komprimierungsverarbeitungseinrichtung an dem Informationsanbieter eingerichtet ist und die Übertragungsverarbeitungseinrichtung an dem Benutzerendgerät eingerichtet ist, und die Übertragungsverarbeitungseinrichtung angepasst ist, die komprimierten Nichtumgebungsdaten und die unkomprimierten Umgebungsdaten zu übertragen, die von dem Informationsanbieter an das Benutzerendgerät übertragen werden, oder
die Komprimierungsverarbeitungseinrichtung und die Übertragungsverarbeitungseinrichtung in einem Server des Informationsanbieters eingerichtet sind.

2. Navigationssystem gemäß Anspruch 1, zusätzlich mit:
einer Empfangsverarbeitungseinrichtung, die angepasst ist, die komprimierten Nichtumgebungsdaten und die unkomprimierten Umgebungsdaten zu empfangen, wobei
die Empfangsverarbeitungseinrichtung an der Navigationsvorrichtung eingerichtet ist.

3. Navigationssystem gemäß Anspruch 1 oder 2, wobei
die Nichtumgebungsdaten in mehrere kleine Teildaten aufgeteilt sind, und
die mehreren kleinen Teildaten Routenumgebungsdaten eines Gebiets nahe einer Suchroute und andere Nichtroutenumgebungsdaten sind.

4. Navigationssystem gemäß Anspruch 3, wobei die Komprimierungsverarbeitungseinrichtung angepasst ist, die Routenumgebungsdaten und die Nichtroutenumgebungsdaten mit unterschiedlichen Komprimierungsraten zu komprimieren.

5. Navigationssystem gemäß Anspruch 4, wobei die Komprimierungsrate der Nichtroutenumgebungsdaten höher ist als die Komprimierungsrate der Routenumgebungsdaten.

6. Navigationssystem gemäß Anspruch 1 oder 2, wobei die Navigationsinformationen Kartendaten oder Routenführungsdaten sind, die Routendaten enthalten, die zumindest eine Suchroute bezeichnen.

7. Informationsaufzeichnungsverfahrensprogramm für ein Navigationssystem mit einem Benutzerendgerät (61), einem Informationsanbieter (62) und einer Navigationsvorrichtung (14), **dadurch gekennzeichnet, dass** zumindest ein Computer dazu veranlasst wird, zu funktionieren als
eine Komprimierungsverarbeitungseinrichtung zum Komprimieren, aus Umgebungsdaten über ein Gebiet nahe einem Fahrzeugfahrtstartpunkt und anderen Nichtumgebungsdaten in Navigationsinformationen, der Nichtumgebungsdaten, um komprimierte Nichtumgebungsdaten zu erzeugen, und
eine Übertragungsverarbeitungseinrichtung zum Übertragen der komprimierten Nichtumgebungsdaten und der unkomprimierten Umgebungsdaten an die Navigationsvorrichtung,
wobei der zumindest eine Computer veranlasst wird, derart zu funktionieren, dass
die Komprimierungsverarbeitungseinrichtung und die Übertragungsverarbeitungseinrichtung an dem Benutzerendgerät eingerichtet sind, und die Komprimierungsverarbeitungseinrichtung angepasst ist, die Nichtumgebungsdaten in den Navigationsinformationen zu komprimieren, die von dem Informationsanbieter an das Benutzerendgerät übertragen werden, oder
die Komprimierungsverarbeitungseinrichtung an dem Informationsanbieter eingerichtet ist und die Übertragungsverarbeitungseinrichtung an dem Benutzerendgerät eingerichtet ist, und die Übertragungsverarbeitungseinrichtung angepasst ist, die komprimierten Nichtumgebungsdaten und die unkomprimierten Umgebungsdaten zu übertragen, die von dem Informationsanbieter an das Benutzerendgerät übertragen werden, oder
die Komprimierungsverarbeitungseinrichtung und die Übertragungsverarbeitungseinrichtung in einem Server des Informationsanbieters eingerichtet sind.

## Revendications

1. Système de navigation comprenant un terminal d'utilisateur (61), un fournisseur d'information (62) et un dispositif de navigation (14), **caractérisé en ce qu'**il comprend :
un moyen de traitement de compression qui est apte à comprimer, à partir de données des environs d'une région proche d'un point de départ de trajet de véhicule et d'autres données qui ne sont pas des environs dans une information de navigation, les données qui ne sont pas des environs pour créer des données qui ne sont pas des environs comprimées ; et
un moyen de traitement de transmission qui est apte à transmettre, au dispositif de navigation, lesdites données qui ne sont pas des environs comprimées et lesdites données des environs décomprimées,
dans lequel ledit moyen de traitement de compression et ledit moyen de traitement de transmission sont disposés au niveau du terminal d'utilisateur, et ledit moyen de traitement de compression est apte à comprimer lesdites données qui ne sont pas des environs dans ladite information de navigation, qui est transmise du fournisseur d'information au terminal d'utilisateur, ou
dans lequel ledit moyen de traitement de compression est disposé au niveau du fournisseur d'information et ledit moyen de traitement de transmission est disposé au niveau du terminal d'utilisateur, et ledit moyen de traitement de transmission est apte à transmettre lesdites données qui ne sont pas des environs comprimées et lesdites données des environs décomprimées, qui sont transmises du fournisseur d'information au terminal d'utilisateur, ou
dans lequel ledit moyen de traitement de compression et ledit moyen de traitement de transmission sont disposés dans un serveur du fournisseur d'information.

2. Système de navigation selon la revendication 1, comprenant en outre :
un moyen de traitement de réception qui est apte à recevoir lesdites données qui ne sont pas des environs comprimées et lesdites données des environs décomprimées,
dans lequel ledit moyen de traitement de réception est disposé au niveau du dispositif de navigation.

3. Système de navigation selon la revendication 1 ou 2,
dans lequel lesdites données qui ne sont pas des environs sont divisées en plusieurs petites données élémentaires, et
dans lequel lesdites plusieurs petites données élémentaires sont des données des environs de route d'une région proche d'une route recherchée et d'autres données qui ne sont pas des environs d'une route.

4. Système de navigation selon la revendication 3, dans lequel ledit moyen de traitement de compression est apte à comprimer les données des environs de route et les données qui ne sont pas des environs de route à des taux de compression différents.

5. Système de navigation selon la revendication 4, dans lequel le taux de compression des données qui ne sont pas des environs de route est plus élevé que le taux de compression des données des environs de route.

6. Système de navigation selon la revendication 1 ou 2, dans lequel ladite information de navigation est constituée de données de cartographie ou de données de guidage routier contenant des données de route indiquant au moins une route recherchée.

7. Programme de procédé d'enregistrement d'information pour un système de navigation comprenant un terminal d'utilisateur (61), un fournisseur d'information (62) et un dispositif de navigation (14), **caractérisé en ce qu'**au moins un processeur est constitué pour fonctionner comme :
un moyen de traitement de compression destiné à comprimer, à partir de données des environs d'une région proche d'un point de départ de trajet de véhicule et d'autres données qui ne sont pas des environs dans une information de navigation, les données qui ne sont pas des environs pour créer des données qui ne sont pas des environs comprimées ; et
un moyen de traitement de transmission destiné à transmettre, au dispositif de navigation, lesdites données qui ne sont pas des environs comprimées et lesdites données des environs décomprimées,
dans lequel l'au moins un processeur est constitué pour fonctionner de façon :
que ledit moyen de traitement de compression et ledit moyen de traitement de transmission sont disposés au niveau du terminal d'utilisateur, et ledit moyen de traitement de compression est apte à comprimer lesdites données qui ne sont pas des environs dans ladite information de navigation, qui est transmise du fournisseur d'information au terminal d'utilisateur, ou
que ledit moyen de traitement de compression est disposé au niveau du fournisseur d'information et ledit moyen de traitement de transmission est disposé au niveau du terminal d'utilisateur, et ledit moyen de traitement de transmission est apte à transmettre lesdites données qui ne sont pas des environs comprimées et lesdites données des environs décomprimées, qui sont transmises du fournisseur d'information au terminal d'utilisateur, ou
que ledit moyen de traitement de compression et ledit moyen de traitement de transmission sont disposés dans un serveur du fournisseur d'information.
